(19) Europäisches Patentamt
European Patent Office
Office européen des brevets

(11) EP 4 543 043 A1

(12) **EUROPÄISCHE PATENTANMELDUNG**

(43) Veröffentlichungstag:
23.04.2025 Patentblatt 2025/17

(21) Anmeldenummer: 23204233.3

(22) Anmeldetag: 18.10.2023

(51) Internationale Patentklassifikation (IPC):
*H04R 19/00* (2006.01)    *H04R 19/04* (2006.01)
*H04R 23/02* (2006.01)    *G01N 21/17* (2006.01)

(52) Gemeinsame Patentklassifikation (CPC):
**H04R 19/005; G01N 21/1702; H04R 19/04;**
**H04R 23/02;** G01N 2021/1704; H04R 2201/003

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(71) Anmelder: **Hahn-Schickard-Gesellschaft**
**für angewandte Forschung e. V.**
**70569 Stuttgart (DE)**

(72) Erfinder:
• **Dehé, Alfons**
**72770 Reutlingen (DE)**
• **Gupta, Akash**
**78052 Villingen-Schwenningen (DE)**

(74) Vertreter: **Hertin und Partner**
**Rechts- und Patentanwälte PartG mbB**
**Kurfürstendamm 63**
**10707 Berlin (DE)**

(54) **MEMS-MIKROFON MIT EINER VENTILATIONSÖFFNUNG**

(57) Die Erfindung betrifft ein MEMS-Mikrofon zur Detektion von Schallwellen. Das MEMS-Mikrofon umfasst einen Sensor und ein Gehäuse. Das Gehäuse umschließt einen Innenbereich des MEMS-Mikrofons und weist eine Ventilationsöffnung auf, welche eine Fluidkommunikation zwischen dem Innenbereich und einem Außenbereich des MEMS-Mikrofons ermöglicht. Hierbei ist der Sensor ein thermischer Sensor, welcher dazu konfiguriert ist, Schallwellen, welche zu einer Druckdifferenz zwischen dem Innenbereich und dem Außenbereich des MEMS-Mikrofons führen, anhand einer Fluidströmung durch die Ventilationsöffnung zu messen.

Darüber hinaus betrifft die Erfindung einen photoakustischen Gassensor, dessen Sensorkammer analog zum MEMS-Mikrofon ebenfalls einen Sensor und ein Gehäuse umfasst, wobei das Gehäuse einen Innenbereich der Sensorkammer umschließt und die Sensorkammer eine Ventilationsöffnung aufweist, welche eine Fluidkommunikation zwischen dem Innenbereich und einem Außenbereich der Sensorkammer ermöglicht. Der Sensor der Sensorkammer ist analog zum Sensor des MEMS-Mikrofons ein thermischer Sensor, welcher dazu konfiguriert ist, Schallwellen anhand einer Fluidströmung durch die Ventilationsöffnung zu messen.

Fig. 3

**Beschreibung**

Die Erfindung betrifft ein MEMS-Mikrofon zur Detektion von Schallwellen. Das MEMS-Mikrofon umfasst einen Sensor und ein Gehäuse. Das Gehäuse umschließt einen Innenbereich des MEMS-Mikrofons und weist eine Ventilationsöffnung auf, welche eine Fluidkommunikation zwischen dem Innenbereich und einem Außenbereich des MEMS-Mikrofons ermöglicht. Hierbei ist der Sensor ein thermischer Sensor, welcher dazu konfiguriert ist, Schallwellen, welche zu einer Druckdifferenz zwischen dem Innenbereich und dem Außenbereich des MEMS-Mikrofons führen, anhand einer Fluidströmung durch die Ventilationsöffnung zu messen.

Darüber hinaus betrifft die Erfindung einen photoakustischen Gassensor, dessen Sensorkammer analog zum MEMS-Mikrofon ebenfalls einen Sensor und ein Gehäuse umfasst, wobei das Gehäuse einen Innenbereich der Sensorkammer umschließt und die Sensorkammer eine Ventilationsöffnung aufweist, welche eine Fluidkommunikation zwischen dem Innenbereich und einem Außenbereich der Sensorkammer ermöglicht. Der Sensor der Sensorkammer ist analog zum Sensor des MEMS-Mikrofons ein thermischer Sensor, welcher dazu konfiguriert ist, Schallwellen anhand einer Fluidströmung durch die Ventilationsöffnung zu messen.

Hintergrund und Stand der Technik

Für die Herstellung kompakter, mechanisch-elektronischer Vorrichtungen wird heute auf vielen Anwendungsgebieten auf die Mikrosystemtechnik zurückgegriffen. Die so herstellbaren Mikrosysteme (englisch: *microelectromechanical system,* kurz MEMS) sind sehr kompakt (im Mikrometerbereich) bei gleichzeitig hervorragender Funktionalität und immer geringeren Herstellungskosten.

MEMS-Technologien bieten eine Vielzahl vom Mechanismen zur Aktuierung oder Sensorik an. Insbesondere werden durch MEMS-Technologien vielversprechende Möglichkeiten für die Bereitstellung und den Betrieb von Schalldrucksensoren bzw. Mikrofonen (auch bekannt als MEMS-Mikrofone) geboten.

Für MEMS-Mikrofone gibt es eine Vielzahl von Übertragungsmechanismen, die es ermöglichen, den zu detektierenden Schall in ein Messsignal umzuwandeln. Diese können auf einen elektrodynamischen, elektrischen, piezoresistiven, piezoelektrischen, optischen oder kapazitiven Wirkmechanismus beruhen. Verbreitet sind beispielsweise MEMS-Mikrofone auf Basis eines kapazitiven Messprinzips.

Zawawi et al. (2022) umfasst eine Übersicht für im Stand der Technik bekannte kapazitive MEMS-Mikrofone. Kapazitive MEMS-Mikrofone weisen typischerweise zwei zueinander parallel angeordnete Platten auf, die durch eine schwingfähige bzw. auslenkbare Membran und eine Rückplatte gebildet werden. Die Rückplatte ist entlang eines Substrates fest positioniert. Die Membran wird in Folge von Schallwellen ausgelenkt, sodass es zu einer Abstandsvariation zwischen der Rückplatte und der Membran kommt und damit auch zu einer Änderung der Kapazität, wodurch auf die Stärke der Schallwellen geschlossen werden kann. Die Rückplatte kann auch Perforationen aufweisen, sodass die Luft zwischen der Membran und der Rückplatte durch die Perforationen strömen kann. Durch die Perforationen können ein akustisches Rauschen und eine akustische Dämpfung verringert werden. Kapazitive MEMS-Mikrofone haben sich in einer Vielzahl von Anwendungsfeldern als einsatzfähig erwiesen. Allerdings ist es für einen zuverlässigen Betrieb eines kapazitiven MEMS-Mikrofons notwendig, die Fläche der Rückplatte und der Membran besonders präzise einzustellen, was mit einem aufwendigen Fertigungsaufwand verbunden ist. Des Weiteren resultiert bei kapazitiven MEMS-Mikrofonen durch die Bauweise oftmals ein zusätzliches Rauschen, beispielsweise durch die Perforationen an der Rückplatte (hinzukommend zum akustischen Rauschen), wodurch die Auflösung des Messsignals verschlechtert wird.

Der Frequenzbereich bzw. das Frequenzband, innerhalb dessen das MEMS-Mikrofon Messungen vornehmen kann, bestimmt die Eignung eines MEMS-Mikrofons für entsprechende Applikationen. Oftmals fällt die Sensitivität von MEMS-Mikrofonen, insbesondere von kapazitiven MEMS-Mikrofonen, unterhalb von 100 Hz ab und beginnt zwischen 4 kHz und 6 kHz aufgrund der Helmholtz-Resonanz zu steigen. Der Aufbau kann dahingehend optimiert werden, dass ein Frequenzband von 20 Hz - 20 kHz erlangt wird, um für den Audiobereich Detektionen vornehmen zu können. Insbesondere für geringe Frequenzen, wie z. B. für den Infraschallbereich, ist jedoch in der Regel kein effektiver Einsatz von kapazitiven MEMS-Mikrofonen möglich.

Ein weiterer Ansatz für die Durchführung von Schallmessungen ist der Einsatz von thermischen Sensoren. Hierbei wird eher eine Geschwindigkeit der Moleküle gemessen und weniger eine Messung des (Schall-)Druckes vorgenommen. In van Honschoten et al. (2005) wird beispielsweise ein thermischer Flusssensor offenbart, der für akustische Messungen eingesetzt werden kann. Der entsprechende Sensor umfasst ein *Microflown,* welcher durch eine Anordnung umfassend drei Drähten gebildet wird. Ein mittlerer Draht fungiert als Heizelement, während zwei Drähte um das Heizelement positioniert werden und als Sensoren fungieren. Durch die Strömung der Luft entlang des Heizelementes werden unterschiedliche Messergebnisse an den Sensoren gemessen. Durch den Unterschied der beiden Ergebnisse können Rückschlüsse auf den Fluss erzielt werden. Insbesondere können hierdurch akustische Intensitäten, akustische Impedanzen und ein Schalldruck gemessen werden. Der in van Honschoten et al. (2005) offenbarte Sensor weist ein Frequenzband auf von 0 bis über 5 kHz auf mit einer minimalen nachweisbaren Partikelgeschwindigkeit von etwa 70 nm/s bei 2 bis 5 kHz.

Auch in Xu et al. (2022) wird eine Anordnung offenbart, mit dem durch den Einsatz thermischer Sensoren die Durchführung akustischer Messungen ermöglicht wird. Hierbei liegt in einer Kreuzform ein Heizelement mit vier Drähten vor, welche jeweils von einem thermischen Sensor umgeben werden, welche auf einem Substrat als Stütze angeordnet sind. Die Temperatursensoren erkennen eine Temperaturänderung durch eine Änderung des Widerstandes. Die Heizelemente und die Temperatursensoren befinden sich oberhalb einer Rückplatte, die als Gitter ausgestaltet ist und als Wärmesenke wirkt und zudem akustisch transparent ist. Durch die Wärmesenke wird eine höhere Sensitivität in z-Richtung erreicht. In allen 3 kartesischen Raumachsen kann eine geeignete Sensitivität bei einem Frequenzbereich von 300 - 5000 Hz festgestellt werden. Bei einer Frequenz von unter 300 Hz ist die Sensitivität entlang der z-Achse durch die gitterförmige Rückplatte jedoch eingeschränkt.

MEMS-Mikrofone eignen sich aufgrund Ihres Aufbaus auch dafür, im Kontext der photoakustischen Spektroskopie verwandt zu werden. Hierbei wird der photoakustische Effekt genutzt, um Gasuntersuchungen vorzunehmen. Dabei wird in einem Medium in schneller Folge durch emittierende Lichtpulse Energie zugeführt. Der resultierende ständige Wechsel zwischen Erhitzung und Abkühlung führt zu abwechselnder Wärmeausdehnung und -kontraktion. Diese Vibrationen können als Schall wahrgenommen werden. Für die Untersuchung von Gasen wird sich zunutze gemacht, dass Gasmoleküle nur Licht ganz bestimmter Wellenlänge bzw. Frequenz absorbieren. Welche dies sind, hängt von der chemischen Struktur und Komposition des Gases ab. Zum Nachweis eines bestimmten Gasbestandteils in einem Gasgemisch werden Lichtpulse verwendet, deren Frequenzen nur von einer Sorte Moleküle absorbiert werden können. Die Schallwellen können durch ein MEMS-Mikrofon festgestellt werden. Ein umso höherer Anteil des zu detektierenden Gases resultiert zu einem ausgeprägteren Messsignal am MEMS-Mikrofon. Häufig sind in der photoakustischen Spektroskopie niedrige Frequenzen zu detektieren. So kann bereits durch einen im Stand der Technik bekannten thermischen Sensor durch eine Modulation des von einem Heizelement ausgehenden Wärmefeldes durch die Schallwellen detektiert werden.

In US 10451589 B2 wird beispielsweise ein Detektor offenbart, der im Kontext der PAS eingesetzt wird. Dieser umfasst ein Außengehäuse mit einer Außengehäusewand sowie eine Gaskammer, die innerhalb des Außengehäuses angeordnet ist. Ferner ist die Gaskammer dazu eingerichtet ist, ein Gas in sich aufzunehmen, wobei die Außengehäusewand eine Öffnung aufweist, die einen Gasdurchgang zwischen der Gaskammer und der Außenseite bereitstellt. Weiterhin liegt ein Anregungselement vor, das dazu eingerichtet ist, selektiv Gasmoleküle eines spezifischen Typs in dem in der Gaskammer aufgenommenen Gas zeitlich variierend anzuregen, wodurch Schallwellen erzeugt werden. Ein MEMS-Mikrofon dient der Detektion der Schallwellen, wobei das MEMS-Mikrofon eine mechanische Struktur umfasst, die durch die zu detektierenden Schallwellen auslenkbar ist.

Der Ansatz eines thermischen Messprinzipes für die Detektion von Schall ist insbesondere aufgrund verringerter Rausch- und verbesserter Sensitivitätseffekte vorteilhaft. Allerdings weisen die entsprechenden Sensoren eine hohe Empfindlichkeit gegenüber Fremdeinwirkungen auf. So können bereits geringste Mengen von Staub, Feuchtigkeit, etc. innerhalb des Sensors den Betrieb erheblich einschränken, sodass keine oder nur eine unzuverlässige Messung des Schalls ausgeführt werden kann.

Im Lichte bekannter Ansätze des Standes der Technik gibt es mithin einen Bedarf, den Aufbau und die funktionellen Eigenschaften von MEMS-Mikrofonen weiter zu optimieren.

Aufgabe der Erfindung

Die Aufgabe der Erfindung ist es, die aus dem Stand der Technik bekannten Nachteile zu beseitigen. Insbesondere ist eine Aufgabe der Erfindung, ein MEMS-Mikrofon zu bieten, mit dem eine dauerhafte und zuverlässige Messung von Schallereignissen gewährleistet werden kann, wobei sich das MEMS-Mikrofon bevorzugt durch ein verringertes Rauschen und eine hohe Sensitivität über einen breiten Frequenzbereich auszeichnet.

Zusammenfassung der Erfindung

Die Aufgabe Erfindung wird gelöst durch die unabhängigen Ansprüche. Vorteilhafte Ausführungsformen sind in den abhängigen Ansprüchen offenbart.

In einem ersten Aspekt betrifft die Erfindung ein MEMS-Mikrofon zur Detektion von Schallwellen umfassend einen Sensor und ein Gehäuse, wobei das Gehäuse einen Innenbereich des MEMS-Mikrofons umschließt und das MEMS-Mikrofon ferner eine Ventilationsöffnung aufweist, welche eine Fluidkommunikation zwischen dem Innenbereich und einem Außenbereich des MEMS-Mikrofons ermöglicht, dadurch gekennzeichnet, dass der Sensor dazu konfiguriert ist, Schallwellen, welche zu einer Druckdifferenz zwischen dem Innenbereich und dem Außenbereich des MEMS-Mikrofons führen, anhand einer Fluidströmung durch die Ventilationsöffnung zu messen.

Das erfindungsgemäße MEMS-Mikrofon nutzt aus, dass eine Druckdifferenz zwischen zwei Bereichen, hierbei einem Innenbereich und Außenbereich, dazu führt, dass ein Fluid für einen Druckausgleich eine Strömung ausführt. Eine Druckdifferenz zwischen dem Innenbereich und dem Außenbereich kann insbesondere auftreten, wenn ein Schallereignis stattfindet, d. h. ein Ereignis, welches zur Bildung und Ausbreitung von Schallwellen führt. So kann es beispielsweise sein, dass im Außenbereich ein höherer Druck vorliegt oder durch ein Schallereignis sich im Außenbereich ein höherer Druck bildet. Infolgedessen resultiert eine Fluidströmung von dem Außenbereich in den Innenbereich über die Ventilationsöffnung.

Ebenso kann der umgekehrte Fall auftreten. Hierbei würde eine Druckdifferenz zwischen dem Innenbereich und dem Außenbereich des MEMS-Mikrofons vorliegen, wenn ein Referenzdruck im Innenbereich höher ist als ein Druck im Außenbereich. Infolge dieses Druckunterschiedes ergibt sich eine Fluidströmung vom Innenbereich in den Außenbereich.

Durch den Sensor kann eine resultierende Fluidströmung erfasst werden, wodurch Rückschlüsse auf das Schallereignis ermöglicht werden.

Das erfindungsgemäße MEMS-Mikrofon ist durch eine Reihe von Vorteilen gekennzeichnet.

Insbesondere erlaubt das erfindungsgemäße MEMS-Mikrofon die Aufnahme hochaufgelöster und besonders präziser Messsignale über einen weiten Frequenzbereich. Durch den kompakten, einfachen Aufbau werden beispielsweise Einflussfaktoren, die Rauschsignale begünstigen und damit das Messsignal verfälschen können, verringert. So kann im Gegensatz zu bekannten kapazitiven Mikrofonen auf eine perforierte Rückplatte verzichtet werden, welche durch den Durchlass von Schallwellen ein Rauschen verursachen kann.

Vorteilhaft eignet sich das erfindungsgemäße MEMS-Mikrofon zudem besonders gut für die Detektion von Schallwellen mit geringen Frequenzen, d. h. insbesondere von Frequenzen unterhalb von 100 Hz. Im Stand der Technik hat sich die Detektion von derart niederfrequenten Schallereignissen als schwierig erwiesen. So liegen insbesondere bei kapazitiven Mikrofonen bereits Einschränkungen bei der Messung von Schallwellen mit Frequenzen unter 100 Hz vor (siehe Shin et al. (2020)). Das hängt bei kapazitiven MEMS-Mikrofonen unter anderem mit dem Rückvolumen und der Größe der Schalleintrittsöffnung zusammen. Mit dem erfindungsgemäßen MEMS-Mikrofon kann vorteilhaft eine untere Grenzfrequenz jedoch besonders geringgehalten werden, wie im Folgenden näher erläutert wird. Insbesondere können vorteilhaft auch Frequenzen im Infraschall gemessen werden. Durch die Möglichkeit der Erfassung niedriger Frequenzen hat das erfindungsgemäße MEMS-Mikrofon eine zuverlässige Einsatzfähigkeit im Kontext der photoakustischen Spektroskopie (PAS) auf.

Die Möglichkeit sensitiver Messungen und einer höheren Auflösung resultiert unter anderem durch einen möglichen hohen akustischen Widerstrand durch Ventilationsöffnungen mit entsprechend geringem Querschnitt. Vorteilhaft sind auf diese Weise auch besondere geringe Druckdifferenzen erfassbar, sodass sich der Sensor in ausgezeichneter Weise für die akustischen Messungen als Schalldetektor, beispielsweise in einem photoakustischen Gassensor eingesetzt werden kann.

Die Ventilationsöffnung korrespondiert bevorzugt mit einem akustischen Widerstand, während das Rückvolumen mit einer Kapazität bzw. einer akustischen Compliance zusammenhängt. Durch eine entsprechende Wahl eines geringen Querschnitts der Ventilationsöffnung kann vorteilhaft ein hoher akustischer Widerstand eingestellt werden. Hierdurch kann der Messbereich in Bezug auf niedrige Grenzfrequenzen erweitert bzw. ein geringeres Rückvolumen für gewünschte Messfrequenzen bereitgestellt werden.

Für eine untere akustische Grenzfrequenz (engl.: *cutoff frequency*) $\omega$ gilt: $\omega = 1/(R_S C_{bv})$.

Die akustische Kapazität $C_{bv}$ korrespondiert mit einem Rückvolumen, welches durch einen räumlichen Abschnitt zwischen dem Träger (für den thermischen Sensor) und einer Abdeckung vorliegt. Der akustische Widerstand Rs kann vorteilhaft durch einen geringen Querschnitt der Ventilationsöffnung hoch eingestellt werden. Somit kann vorteilhaft eine besonders niedrige untere Grenzfrequenz auch bei verhältnismäßig kleinem Rückvolumen gewährleistet werden, in dem der akustischen Widerstands hinreichend hoch gewählt wird. Weiterhin kann für das MEMS-Mikrofon auch eine hohe akustische Kapazität $C_{bv}$ eingestellt werden, insbesondere durch Festlegung des Volumens für den Innenbereich. Der Innenbereich bildet bevorzugt den Bereich welcher vom Gehäuse eingeschlossen ist bis zur Ventilationsöffnung. Vorzugsweise kann der Innenbereich als Rückvolumen des MEMS-Mikrofons aufgefasst werden. Durch ein hohes Rückvolumen und/oder einem hohen akustischen Widerstand, welcher insbesondere durch die Ausgestaltung der Ventilationsöffnung bestimmt wird, ergibt sich eine besonders niedrige Grenzfrequenz. Dadurch kann das MEMS-Mikrofon vorteilhaft auch Schall detektieren, der eine Frequenz im Infraschallbereich aufweist, d. h. unterhalb von 20 Hz, besonders bevorzugt unterhalb von 16 Hz. Die untere Grenzfrequenz kann beispielsweise einen Wert aufweisen von 0,01 - 30 Hz, bevorzugt von 0,1 - 20 Hz, besonders bevorzugt 1 Hz - 15 Hz.

Dabei bezeichnet eine untere Grenzfrequenz bevorzugt eine Frequenz, unterhalb derer im Falle dynamischer Druckschwankungen der thermische Sensor die Fluidströmung mit verminderter Sensitivität messen kann. Die untere Grenzfrequenz wird, wie obig erläutert, insbesondere durch den akustischen bzw. fluidischen Widerstand und/oder die Kapazität bzw. dem Rückvolumen des MEMS-Mikrofons bestimmt.

Eine obere Grenzfrequenz kennzeichnet vorzugsweise eine Frequenz, oberhalb derer die Schallereignisse mit verminderter Sensitivität vermessen werden können. Während die untere Grenzfrequenz durch den Aufbau des MEMS-Mikrofons bestimmt wird, insbesondere durch die Ventilationsöffnung und das Gehäuse, wird die obere Grenzfrequenz bevorzugt im Wesentlichen durch den Sensor bestimmt. Anders ausgedrückt, hängt die obere Grenzfrequenz bevorzugt mit Komponenten und/oder der Ausgestaltung des Sensors zusammen. Dies soll im Folgenden beispielhaft für die bevorzugte Ausführungsform beschrieben werden, in welcher der Sensor ein thermischer Sensor ist. So kann in einer bevorzugten Ausführungsform der Sensor als thermischer Sensor vorliegen, der bevorzugt ein Heizelement und einen Temperatursensor aufweisen kann. Die obere Grenzfrequenz kann beispielsweise durch eine Wärmekapazität des Temperatursensors des thermischen Sensors oder eines thermischen Widerstands einer Membranbeeinflusst werden, auf welcher sich ein Temperatursensor und/oder ein Heizelement befindet. Die obere Grenzfrequenz kann insbesondere auch von der Temperaturleitfähigkeit des Fluides abhängen, in dem sich die Schallwellen ausbreiten. Mithin ist auch der Wärmetransport durch das Fluid für die obere Grenzfrequenz zumindest mitbestimmend. So kann bei hohen Frequenzen von Druckschwankungen und einer entsprechend schnell fluktuierenden Wärmemodulation der Temperatursensor an eine messtechnische Grenze gelangen, bei der dieser die Modulation nicht mehr auflöst. Zu beachten ist diesbezüglich, dass die Modulation des Wärmestroms mit einer höheren Frequenz vorzugsweise doppelt so hoch auftritt wie die Frequenz eines akustischen Signals. Das hängt insbesondere damit zusammen, dass der Temperatursensor sowohl in einem positiven Druckzyklus (bei einer Druckerhöhung im Außenbereich und einem in den Innenbereich einströmenden Fluid) als auch in einem niedrigen Druckzyklus (bei einer Druckverringerung im Außenbereich und einem aus dem Innenbereich ausströmenden) eine geringere Temperatur erfasst, bedingt durch eine entsprechende Modulation eines Wärmestroms. Durch die Bereitstellung eines miniaturisierten Temperatursensors können vorteilhaft ebenfalls hohe obere Grenzfrequenzen erreicht werden. Die obere Grenzfrequenz kann beispielsweise einen Wert aufweisen von mehr als 1 kHz, mehr als 10 kHz, bevorzugt mehr als 100 kHz.

Demzufolge kann durch das MEMS-Mikrofon bevorzugt sowohl eine besonders geringe untere Grenzfrequenz als auch eine hohe obere Grenzfrequenzen erreicht werden, sodass ein breites Frequenzband vorliegt, indem zuverlässige Messungen von Schallwellen erfolgen können.

Damit wird vorteilhafterweise durch das erfindungsgemäße MEMS-Mikrofon die Messung innerhalb eines besonders breiten Frequenzbandes ermöglicht. Die Breite des Frequenzbandes kann durch die Differenz zwischen der oberen Grenzfrequenz und der unteren Grenzfrequenz bestimmt werden. Dabei bezeichnet, wie obig erläutert, eine untere Grenzfrequenz bevorzugt eine Frequenz, unterhalb derer eine Messung mit nur verminderter Sensitivität ausgeführt werden kann. Auf analoge Weise bezeichnet die obere Grenzfrequenz diejenige Frequenz, oberhalb derer Messungen mit einer verminderten Sensitivität vorgenommen werden können. Die verminderte Sensitivität wird bevorzugt um einen Faktor $1/\sqrt{2}$ des maximalen messbaren Wertes festgelegt. Dies entspricht einer Verringerung eines Pegels, beispielsweise eines Schalldruckpegels, um ca. 3 dB (Dezibel).

Ein weiterer Vorteil des MEMS-Mikrofons ist es, dass durch eine Messung der Fluidströmung Rückschlüsse über eine Amplitude und eine Phase der Schallwellen ermöglicht werden. Das erfindungsgemäße MEMS-Mikrofon basiert auf einer Detektion einer Fluidströmung, welche infolge einer Druckdifferenz zwischen dem Innenbereich und dem Außenbereich resultiert. Die Druckdifferenz entsteht durch Schallwellen, wobei eine Fluidströmung einen Druckausgleich zwischen dem Innenbereich und dem Außenbereich bewirkt. Dabei ist das MEMS-Mikrofon in der Lage, die Richtung der Fluidströmung zu erkennen. So kann beispielsweise bei einem Gehäuse, das bevorzugt als robuste Abdeckung vorliegt, beim Auftreffen einer Schallwelle ein höherer Druck im Außenbereich vorliegen. Infolgedessen strömt Fluid vom Außenbereich in den Innenbereich. Umgekehrt kann bei einem niedrigeren Druck im Außenbereich das Fluid vom Innenbereich in den Außenbereich für einen Druckausgleich strömen. Hierbei kann beispielsweise festgelegt werden, dass eine Fluidströmung vom Außenbereich in den Innenbereich mit einer positiven Geschwindigkeit zuordenbar ist, während eine Fluidströmung vom Innenbereich in den Außenbereich mit einer negativen Geschwindigkeit bzw. negativen Richtung zugeordnet werden kann. Mithin ist eine gerichtete Messung möglich, wodurch mehre Informationen insbesondere bezüglich einer Phase und Amplitude der Schallwellen gewonnen werden können.

Weiterhin kann durch den kompakten Aufbau ein besonders robustes MEMS-Mikrofon erhalten werden, wobei durch das Gehäuse und die Trennung zwischen einem Innenbereich und einem Außenbereich die Empfindlichkeit gegenüber Fremdeinflüssen wie Feuchtigkeit, Staub etc. weiter reduziert wird.

Ein MEMS-Mikrofon bezeichnet bevorzugt ein Mikrofon, welches auf MEMS-Technologie basiert und dessen klang- bzw. schallmessenden Strukturen mindestens teilweise eine Dimensionierung im Mikrometerbereich (1 μm - 1000 μm) aufweisen. Bevorzugt wird im erfindungsgemäßen Kontext der thermische Sensor als schallmessende Struktur verwandt. Demgemäß ist es bevorzugt, dass zumindest der thermische Sensor auf MEMS-Technologie basiert und/oder Strukturen umfasst, welche im Mikrometerbereich vorliegen.

Das Gehäuse des MEMS-Mikrofons bezeichnet bevorzugt eine stabile und schützende Umhüllung. Insbesondere dient das Gehäuse dem Schutz der Komponenten des MEMS-Mikrofons, beispielsweise vor Fremdmaterial und/oder Beschädigungen. Das Gehäuse kann jedoch auch weitere Funktionen erfüllen. Beispielsweise kann das Gehäuse neben der Schutzfunktion auch eine Trägerfunktion erfüllen. Vorteilhafterweise verringert der Verzicht auf eine zusätzliche tragende Struktur das Gewicht, die Anzahl der Baukomponenten, den Montageaufwand und damit auch die Kosten für die Herstellung des MEMS-Mikrofons.

Am Gehäuse befinden sich bevorzugt Befestigungsbereiche, um einen thermischen Sensor mit dem Gehäuse zu verbinden. Dabei können übliche im Stand der Technik bekannte Optionen eingesetzt werden, wie beispielsweise löten und/oder kleben. Solche Befestigungsmöglichkeiten und Verfahren liegen im Kenntnisbereich des durchschnittlichen Fachmanns.

Insbesondere wird durch das Gehäuse der Innenbereich des MEMS-Mikrofons umschlossen. Der Innenbereich umfasst den Raumabschnitt, der innerhalb des Gehäuses gegeben ist. Insbesondere umfasst der Innenbereich bevorzugterweise das Volumen, welches ab der Ventilationsöffnung bis zum Gehäuse vorliegt. Die Ventilationsöffnung führt somit bevorzugt zu einer Trennung zwischen dem Innenbereich und dem Außenbereich des MEMS-Mikrofons. Weiterhin ist es bevorzugt, dass der thermische Sensor angrenzend zur Ventilationsöffnung positioniert ist, um eine zuverlässige Detektion der Fluidströmung gewährleisten zu können.

Der Außenbereich kennzeichnet einen räumlichen Bereich, der außerhalb des Gehäuses liegt, also bevorzugt eine (äußere) Umgebung des Mikrofons darstellt. In dem Außenbereich können Schallereignisse auftreten, welche sich als Schallwellen ausbreiten. Beim Auftreffen der Schallwellen auf das MEMS-Mikrofon führen diese zu einem Druckunterschied zwischen dem Innenbereich und dem Außenbereich, welche, wie obig erläutert, in eine Fluidströmung durch die Ventilationsöffnung resultiert. Das MEMS-Mikrofon kann somit Schallwellen detektieren, indem der thermischen Sensor eine resultierende Fluidströmung durch die Ventilationsöffnung mit hoher Sensitivität (und vorteilhaft auch für geringere Frequenzen) messen kann.

Die Ventilationsöffnung bezeichnet bevorzugt einen Abschnitt des MEMS-Mikrofons, durch den eine Fluidkommunikation zwischen dem Außenbereich und dem Innenbereich ermöglicht wird. Insbesondere werden durch die Ventilationsöffnung der Außenbereich und der Innenbereich voneinander getrennt. Mit Fluidkommunikation ist insbesondere gemeint, dass ein Austausch eines Fluides zwischen dem Außenbereich und dem Innenbereich erfolgen kann, sofern zwischen den beiden Bereichen eine Druckdifferenz vorliegt. Eine solche Druckdifferenz kann insbesondere durch Schallereignisse bzw. dem Auftreffen von Schallwellen generiert werden, wobei ein Druckausgleich über die Ventilationsöffnung durch eine entsprechende Fluidströmung erfolgt. Schallwellen bezeichnen Wellen, die sich in Form von mechanischen Schwingungen innerhalb eines elastischen Mediums, wie z. B. innerhalb eines Fluides, ausbreiten. Die mechanischen Schwingungen rufen Dichte- und insbesondere auch Druckschwankungen hervor, die sich in dem Fluid ausbreiten und so die Schallwellen bilden. Daher werden Schallwellen auch als Schalldruckwellen bezeichnet, die unter anderem durch einen Schalldruck und/oder Schalldruckpegel beschrieben werden können. Schallwellen entstehen durch ein Schallereignis, welches den Grund für die Ausbreitung der Schallwellen bildet. Treffen Schallwellen auf das Mikrofon, liegt ein Druckunterschied zwischen dem Außenbereich und dem Innenbereich des MEMS-Mikrofons vor. Der Druckunterschied zwischen dem Außenbereich und dem Innenbereich wird ausgeglichen, in dem das Fluid, in dem sich die Schallwellen ausbreiten, vom Außenbereich in den Innenbereich oder umgekehrt strömt. Während mit den Schallwellen bevorzugt eine Ausbreitung von Schwingungen und kein tatsächlicher Materialfluss gemeint ist, findet bei der Fluidströmung bevorzugt ein tatsächlicher Materialfluss statt.

Das Fluid kann eine Flüssigkeit oder ein Gas, beispielsweise Luft, umfassen. Vorzugsweise bildet die Ventilationsöffnung einen offengelassen Abschnitt des MEMS-Mikrofons, beispielsweise eine Apertur in einer Membran, deren Dimension im Hinblick auf Messungen in einem gewünschten Frequenzband angepasst werden kann. Die Ventilationsöffnung kann durch ihre Ausgestaltung auch den Einfluss der Fluidströmung auf den Sensor beeinflussen. Bei einem geringeren Querschnitt der Ventilationsöffnung weist die Fluidströmung bei einem gleichmäßigen DC-Fluidfluss eine höhere Geschwindigkeit auf. Wie untenstehend näher erläutert, kann es bei einer oszillierenden Fluidströmung für Schallwellen auch zu verringerten Flussgeschwindigkeiten bei einem kleinerem Querschnitt kommen. Über die Größe des Querschnittes der Ventilationsöffnung kann mithin vorteilhaft ein Einfluss der Fluidströmung auf einen Sensor bzw. dessen Sensitivität eingestellt werden.

Es kann bevorzugt sein, dass die Ventilationsöffnung als eine einzige Öffnung vorliegt. Ebenfalls kann es bevorzugt sein, dass die Ventilationsöffnung durch miteinander verbundene Stege gebildet wird, welche beispielsweise innerhalb der Membran vorliegen, auf der sich bevorzugt der Sensor befindet. Mithin kann die Ventilationsöffnung bevorzugt auch als eine Gitterstruktur vorliegen, welche durch Stege gebildet wird, sodass durch die Zwischenräume zwischen den Stegen weiterhin eine Fluidkommunikation zwischen dem Innenbereich und dem Außenbereich gewährleistet wird. Die Zwischenräume können beispielsweise einen quadratischen, rechteckigen, schlitzförmigen, kreisförmigen oder ellipsenförmigen Querschnitt aufweisen. Durch eine Gitterstruktur wird vorteilhafterweise ein Wärmeverlust verringert, wenn diese auf einer Membran vorliegt, auf der sich ein Heizelement eines bevorzugten thermischen Sensors befindet. Die Gitterstruktur umfassend Stege bietet eine hohe mechanische Stabilität bei einer gleichzeitigen Verminderung der parasitären Wärmeleitung. Die Gitterstruktur kann sich beispielsweise entlang eines Teilbereiches erstrecken, sodass die Gitterstruktur zwischen Heizelement und Temperatursensor vorliegt.

Bevorzugt befindet sich der Sensor in hinreichender Nähe (d. h. bevorzugt in einem Abstand von weniger als 50 $\mu$m, bevorzugt weniger als 20 $\mu$m) zur Ventilationsöffnung, sodass Veränderungen einer Fluidströmung durch die Ventilationsöffnung in Abhängigkeit der Schallwellen von diesem mit hoher Präzision erkannt werden können. Der Sensor kann sich beispielsweise auf einer Membran angrenzend zu einer Apertur befinden, welche eine Ventilationsöffnung bildet.

Der Sensor fungiert im erfindungsgemäßen Kontext als eine Komponente, die bevorzugt dazu konfiguriert ist, Schallwellen, anhand einer Fluidströmung durch die Ventilationsöffnung zu messen. Der Sensor kann bevorzugt ein beliebiger Sensor sein, welcher in der Lage ist, die Fluidströmung durch die Ventilationsöffnung zu messen. Bevorzugt ist der Sensor ein Strömungssensor. Besonders bevorzugt ist der Sensor ein thermischer Sensor, wobei vorzugsweise ein thermischer Sensor einen Strömungssensor bezeichnet, bei dem die Strömung eines Fluides durch ein thermisches Messprinzip detektiert wird. Beim Einsatz eines bevorzugten thermischen Sensors als Sensor wird insbesondere ein Heizelement eingesetzt, welches dazu konfiguriert ist, einen Wärmestrom bereitzustellen, sodass infolge einer Modulation des Wärmestroms durch die Strömung Rückschlüsse auf Fluid, insbesondere auf die Schallwellen, erzielt werden können. Wie obig erläutert, bezeichnet Schall bevorzugt eine als Welle fortschreitende mechanische Deformation in einem Medium. In einem Fluid, d. h. einem Gas oder eine Flüssigkeit, als Medium ist Schall stets eine Longitudinalwelle. Die Begriffe "Schall" und "Schallwelle" können daher synonym verwendet werden. In Gasen wie Luft kann Schall als eine dem statischen Luftdruck überlagerte Schalldruckwelle beschrieben werden. Meistens sind bei Schallwellen die Schwankungen der Zustandsgrößen umfassend Druck und Dichte klein im Verhältnis zu ihren Ruhegrößen.

In einer weiteren bevorzugten Ausführungsform ist das MEMS-Mikrofon dadurch gekennzeichnet, dass der Sensor ein thermischer Sensor ist, der bevorzugt ein Heizelement und mindestens einen Temperatursensor, vorzugsweise zwei Temperatursensoren, umfasst, sodass die Fluidströmung durch die Ventilationsöffnung anhand einer Modulation eines Wärmestroms zwischen dem Heizelement und dem Temperatursensor messbar ist.

Ein thermischer Sensor meint im erfindungsgemäßen Sinne bevorzugt einen Sensor, der strukturell auf MEMS-Technologie und funktionell auf ein thermisches Messprinzip beruht. Dazu ist es bevorzugt, dass der thermische Sensor ein Heizelement aufweist, durch dessen Ansteuerung ein Wärmestrom in Richtung eines Temperatursensors bereitgestellt werden kann. In Abhängigkeit auftretender Schallwellen moduliert eine durch die Ventilationsöffnung fließende Fluidströmung den Wärmestrom, was anhand einer Änderung der gemessenen Temperatur am Temperatursensor erkennbar ist.

Der Wärmestrom bezeichnet die Wärme als solche, die von dem Heizelement ausgeht und an den Temperatursensor übertragen wird. Es ist für den Fachmann bekannt, dass Wärme für sich genommen eine Energieform darstellt. Die Fluidströmung breitet sich in Abhängigkeit der Schallwellen insbesondere zwischen dem Heizelement und dem Temperatursensor durch den Wärmestrom hindurch aus, sodass die Fluidströmung einen Einfluss auf den Wärmestrom ausübt. Dieser Einfluss und die damit einhergehende Änderung des Wärmestroms durch die Fluidströmung ist durch den Temperatursensor erkennbar, wobei die Änderung des Wärmestroms im erfindungsgemäßen Kontext als Modulation des Wärmestroms bezeichnet wird. In struktureller Hinsicht umfasst der thermische Sensor die für die Funktionstüchtigkeit wesentlichen Komponenten umfassend ein Heizelement und einen Temperatursensor.

Das Heizelement bezeichnet bevorzugt eine Komponente des thermischen Sensors, von der durch Abgabe einer Wärmeenergie der Wärmestrom ausgeht. Mithin dient das Heizelement insbesondere der Bereitstellung eines Wärmestroms. Das Heizelement kann bevorzugt als ein elektrisches Heizelement vorliegen. Ein elektrisches Heizelement bezeichnet bevorzugt ein Heizelement, welches in der Lage ist, elektrische Energie in Wärmeenergie umzuwandeln, der im erfindungsgemäßen Kontext als Wärmestrom verwandt und zum Temperatursensor übertragen wird. Die Wärmeenergie bzw. der Wärmestrom wird bei einem elektrischen Heizelement vorzugsweise derart erzeugt, dass ein elektrisch leitfähiges Material verwandt wird, welches von einem elektrischen Strom durchflossen wird und sich durch Joulesche Wärme erhitzt.

Das Heizelement kann bevorzugt dazu konfiguriert sein, dass bei einer konstanten Heiztemperatur von ihm eine konstante Wärmeabgabe und mithin festgelegter Wärmestrom ausgeht und damit der Temperatursor eine Messtemperatur erkennt. Durch die Wirkung der Fluidströmung wird der Wärmestrom moduliert, sodass es zu einer Änderung der am Temperatursensor gemessenen Messtemperatur kommt. Die Änderung der Messtemperatur ist durch den Temperatursensor feststellbar. Anders ausgedrückt, wird hierbei die Modulation des Wärmestroms durch eine Änderung der Messtemperatur am Temperatursensor erfasst. Umso höher z. B. der Schalldruck der sich ausbreitenden Schallwellen ist, umso niedriger ist die am Temperatursensor messbare Temperatur. Mit anderen Worten ausgedrückt, ist bei einem hohen Schalldruck oder einem hohen Schalldruckpegel der Unterschied zu einer Grundtemperatur größer, als wenn der Schalldruck oder der Schalldruckpegel niedriger ist. Durch den Unterschied zwischen Grundtemperatur und gemessenen Temperatur kann auf Schallparameter geschlossen werden.

Ebenfalls kann es beispielsweise bevorzugt sein, dass der thermische Sensor auf eine konstante Messtemperatur am Temperatursensor geregelt wird. Hierbei ist das Heizelement bevorzugt dazu konfiguriert, dass von diesem eine Wärmeabgabe ausgeht, welche eine konstante Messtemperatur am Temperatursensor gewährleistet. Durch die Wirkung der Fluidströmung bzw. der Schallwellen kommt es zu einer Modulation des Wärmestroms. Allerdings kann durch ein Steuersignal für das Heizelement die Wärmeabgabe bzw. Heiztemperatur derart nachgeregelt werden, dass die Wärmemodulation ausgeglichen und eine konstante Wärmeübertragung an den Temperartursensor erfolgt, sodass die Messtemperatur am Temperatursensor konstant gehalten wird. Die Modulation der Wärme wird mithin durch die notwendige Regelung des Heizelementes erfasst. Ist beispielsweise der Schalldruckpegel der auftreffenden Schallwellen hoch, muss das Steuersignal für die Bereitstellung des Wärmestroms ausgehend von dem Heizelement intensiviert werden, um ein konstante Wärmeübertragung beibehalten zu können.

Vorzugsweise umfasst das Heizelement ein Material ausgewählt aus einer Gruppe umfassend Silizium, Polysilizium, Aluminium, Kupfer, Gold, Platin, Nickel, Silber und/oder Wolfram, wobei bevorzugt das Material als Halbleitermaterial eine Dotierung aufweist. Die bevorzugten Materialien für das Heizelement lassen vorteilhaft eine besonders hohe Temperatur zu, ohne dass es dabei zu Schmelzvorgängen und/oder chemischen Reaktionen (wie z. B. Oxidationen) des Heizelementes und/oder anderer Komponenten kommt. Weiterhin weisen die bevorzugten Materialien einen hohen spezifischen Widerstand auf, sodass eine besonders kompakte Ausgestaltung des Heizelementes ermöglicht werden kann. Eine Dotierung im Falle eines Halbleiters erlaubt eine bessere elektrische Leitfähigkeit und damit auch eine bessere Wärmebereitstellung und Konvektion ausgehend vom Heizelement ermöglichen.

Der Temperatursensor bezeichnet eine Komponente des thermischen Sensors, die insbesondere der Feststellung einer Modulation des Wärmestroms und damit der Messung einer Temperaturänderung durch den Einfluss der Fluidströmung auf den Wärmestrom dient. Vorzugsweise umfasst der thermische Sensor mindestens ein Heizelement.

In weiteren bevorzugten Ausführungsformen kann der thermische Sensor zwei oder mehr Temperatursensoren umfassen. In der bevorzugten Ausführungsform umfassend zwei Temperatursensoren ist es bevorzugt, dass das Heizelement zwischen einem ersten Temperatursensor und einem zweiten Temperatursensor positioniert ist. Besonders bevorzugt ist es, dass der erste Temperatursensor und der zweiten Temperatursensor einen im Wesentlichen identischen Abstand zum Heizelement aufweisen. Durch die Anbringung mindestens zweier Temperatursensoren kann anhand der Laufzeiten eines Wärmetransportes durch die Fluidströmung zum ersten bzw. zweiten Tempertatursensor ein präziser Rückschluss auf Eigenschaften der Schallwellen geschlossen werden. Durch einen im Wesentlichen identischen Abstand des ersten und zweiten Temperatursensors zum Heizelement können vorteilhaft Ungenauigkeiten in der Detektion der Fluidströmung reduziert werden, da Messergebnisse des ersten und zweiten Temperatursensors besser miteinander abgeglichen werden können. Dabei kann es beispielsweise bevorzugt sein, dass lediglich zwischen dem Heizelement und einem ersten Temperatursensor eine Ventilationsöffnung vorliegt, sodass eine Fluidströmung den Wärmestrom moduliert, während der Wärmestrom vom Heizelement zum zweiten Temperatursensor im Wesentlichen unabhängig von einer Fluidströmung ist und eine Referenzmessung erlaubt.

In einer weiteren bevorzugten Ausführungsform ist das MEMS-Mikrofon dadurch gekennzeichnet, dass der Temperatursensor ausgewählt ist aus einer Gruppe umfassend Thermoelement, eine Thermosäule, ein Thermistor und/oder eine Diode.

Mit einem Thermoelement ist bevorzugt eine Anordnung umfassend ein Paar elektrisch leitfähiger Materialien gemeint, die an einem Ende miteinander verbunden sind und aufgrund des thermoelektrischen Effektes einen Rückschluss auf die gemessene Temperatur zulassen. Dabei wird elektrische Energie bei einer Temperaturdifferenz entlang der Anordnung bereitgestellt.

Eine Thermosäule bezeichnet bevorzugt ein Element, welches mehrere Thermoelemente aufweist. Die Thermoelemente der Thermosäule sind bevorzugt elektrisch in Reihe und thermisch parallel geschaltet.

Ein Thermistor meint bevorzugt ein Bauelement umfassend einen elektrischen Widerstand, dessen Wert sich mit der Temperatur reproduzierbar ändert. Thermistoren unterteilen sich in ihren Temperaturverhalten in Heißleiter und Kaltleiter, welche für den thermischen Sensor eingesetzt werden können. Ein Heißleiter weist einen negativen Temperaturkoeffizienten auf und ist in der Lage, elektrischen Strom im heißen Zustand besser leiten zu können als im kalten Zustand. Ein Kaltleiter weist einen positiven Temperaturkoeffizienten auf und kann im kalten Zustand besser elektrisch leiten als im heißen Zustand.

Auch eine Diode kann vorteilhaft als Temperatursensor fungieren. Hierbei kann beispielsweise ausgenutzt werden, dass eine Durchlassspannung einer Diode sich mit der Temperatur im Wesentlichen linear ändert. Umso höher die Temperatur ist, desto geringer ist die Durchlassspannung und umgekehrt. Dementsprechend kann anhand der Änderung einer Durchlassspannung Rückschlüsse auf eine Änderung der Temperatur gezogen werden.

Die genannten bevorzugten Komponenten haben sich als geeignet erwiesen, um als Temperatursensor verwandt zu werden und eine zuverlässige Temperaturmessung infolge der Modulation des Wärmestroms durch die Fluidströmung bzw. die Schallwellen vornehmen zu können.

In einer weiteren bevorzugten Ausführungsform ist das MEMS-Mikrofon dadurch gekennzeichnet, dass der Sensor, bevorzugt ein thermische Sensor, auf einer Membran angebracht ist, wobei die Membran auf einem Träger umfassend eine Kavität vorliegt und die Membran sich über die Kavität erstreckt.

Der Träger bezeichnet bevorzugt eine Tragestruktur für den Sensor. Anders ausgedrückt, handelt es sich bei dem Träger bevorzugt um eine Rahmenstruktur, welche im Wesentlichen durch eine durchgehende äußere Umrandung in Form von Seitenwänden eines freibleibenden flächigen Bereichs gebildet wird. Die Rahmenstruktur ist bevorzugt stabil und biegesteif. Bei einer eckigen Rahmenform (dreieckiger, viereckiger, sechseckig oder allgemein mehreckiger Umriss) werden die einzelnen Seitenbereiche, die die Rahmenstruktur bevorzugt im Wesentlichen bilden, insbesondere Seitenwände genannt.

Die Membran wird bevorzugt von mindestens zwei Seitenwänden des Trägers gehalten. Bevorzugt umfasst der Träger vier Seitenwände, auf denen die Membran angebracht vorliegt. Vorzugsweise ist die Membran flächig innerhalb der freibleibenden Fläche aufgehangen. Die flächige Ausgestaltung der Membran meint bevorzugt, dass Maße wie eine Länge und/oder Breite, um ein Vielfaches höher sind als eine dazu orthogonale Höhe bzw. Dicke. So kann die Länge und/oder Breite um einen Faktor 1,5, 2, 5, 10, 100, 1 000, 10 000 oder mehr höher sein als die Dicke. Vorzugsweise beträgt die Dicke der Membran zwischen 0,1 - 1 000 μm, bevorzugt zwischen 0,5 - 500 μm, besonders bevorzugt zwischen 1 - 300 μm, ganz besonders bevorzugt zwischen 5 - 200 μm.

In einer weiteren bevorzugten Ausführungsform umfasst die Membran ein Material ausgewählt aus einer Gruppe umfassend ein elektrisches leitfähiges Material und/oder ein dielektrisches Material, wobei bevorzugt das elektrisch leitfähige Material ausgewählt ist aus einer Gruppe umfassend Halbleiter und/oder Metalle, insbesondere Silizium, Polysilizium, Graphen, Chalkogenid, wobei bevorzugt das dielektrische Material ausgewählt ist aus einer Gruppe umfassend Siliziumnitrid, Siliziumdioxid, Aluminiumoxid, Aluminiumnitrid, Polyimid und/oder ein polymeres Material.

Die bevorzugten Materialien für die Membran haben sich dahingehend als vorteilhaft erwiesen, dass sie neben der guten Ausgestaltungsmöglichkeiten als hinreichend mechanisch stabile Membran auch eine thermische Isolation bieten, sodass eine durch die Membran bedingte Wärmeleitung verringert oder vermieden wird. Insbesondere kann die parasitäre Wärmeleitung über die Membran minimiert oder eliminiert werden. Dies ist insbesondere dann von Vorteil, wenn der Sensor ein thermischer Sensor ist. Mit der parasitären Wärmeleitung ist insbesondere gemeint, dass eine unerwünschte Wärmeleitung erfolgen kann, insbesondere durch die Membran, welches ebenfalls von einem Temperatursensor eines thermischen Sensors detektiert werden kann. Durch die parasitäre Wärmeleitung wird nachteilig die Sensitivität gegenüber einer Modulation eines Wärmestroms durch die Fluidströmung verringert. Vorteilhaft wird insbesondere durch die genannten Materialien und/oder der Dicke der Membran erreicht, dass der Temperatursensor eine besonders hohe Sensitivität gegenüber der Modulation des Wärmestroms aufweist und andere Wärme- und/oder Temperatureinflüsse die Sensitivität des Temperatursensors nicht oder nur vermindert reduzieren.

In einer weiteren bevorzugten Ausführungsform ist das MEMS-Mikrofon dadurch gekennzeichnet, dass das Gehäuse eine Schalleintrittsöffnung aufweist, sodass sich Schallwellen vom Außenbereich in den Innenbereich ausbreiten und strömungstechnisch zunächst die Schalleintrittsöffnung und daraufhin die Ventilationsöffnung passieren, wobei bevorzugt ein Querschnitt der Schalleintrittsöffnung größer ist als ein Querschnitt der Ventilationsöffnung.

Die Schalleintrittsöffnung bezeichnet bevorzugt eine im Gehäuse vorliegende Öffnung des MEMS-Mikrofons. Vorzugsweise befindet sich die Schalleintrittsöffnung in Fließrichtung des Fluids vor der Durch- oder Überquerung der Fluidströmung durch den thermischen Sensor, insbesondere um eine Modulation des von einem Heizelement bereitgestellten Wärmestroms vorzunehmen.

Die Ventilationsöffnung befindet sich in Fließrichtung zum Inneren des MEMS-Mikrofons, bevorzugt nach der Schalleintrittsöffnung. Mithin treffen die Schallwellen vom Außenbereich zunächst auf die Schalleintrittsöffnung, sodass daraufhin eine Fluidströmung über die Ventilationsöffnung in den Innenbereich des MEMS-Mikrofons erfolgen kann. Die Schalleintrittöffnung wird bevorzugt als eine Auslassung am Gehäuse des MEMS-Mikrofons gebildet. Die Ventilationsöffnung kann bevorzugt als eine Öffnung oder Apertur an einer Membran angebracht sein, auf der der thermische Sensor positioniert ist.

In einer weiteren bevorzugten Ausführungsform ist das MEMS-Mikrofon dadurch gekennzeichnet, dass die Ventilationsöffnung einen Querschnitt von 1 μm² - 100 000 μm², bevorzugt von 1 μm² - 1 000 μm² aufweist und/oder die Ventilationsöffnung eine Form aufweist, ausgewählt aus einer Gruppe umfassend halbkreisförmig, kreisförmig, ellipsenförmig, dreieckig, viereckig, mehreckig oder schlitzförmig.

Die genannten bevorzugten Größen für den Querschnitt und/oder die genannten bevorzugten Formen für die Ausgestaltung der Ventilationsöffnung haben sich dahingehend als vorteilhaft erwiesen, dass ein Übergang der Fluidströmung in das MEMS-Mikrofon hinein oder aus dem MEMS-Mikrofon hinaus ermöglicht wird, um mittels des thermischen Sensors die Detektion von Schall durch die Fluidströmung ermöglichen zu können. Durch die Auswahl der Größe des Querschnitts kann beispielsweise eingestellt werden, wie stark die Modulation eines von einem Heizelement bereitgestellten Wärmestroms beim Einsatz eines thermischen Sensors als Sensor ist, insbesondere bei erwartbaren Schalldruckpegeln. Insbesondere kann durch die Ausgestaltung der Dimensionierung der Ventilationsöffnung eingestellt werden, wie hoch die Geschwindigkeit der Fluidströmung durch die Ventilationsöffnung ist. Mithin kann durch den Querschnitt und/oder die Form der Einfluss auf die Fluidströmung auf einen Wärmestrom und damit auch ein Messbereich des Sensors eingestellt werden.

Insbesondere ermöglicht die Ausgestaltung der Ventilationsöffnung eine Einflussnahme auf den akustischen Widerstand des MEMS-Mikrofons. Dabei wird bevorzugt der akustische Widerstand als Summe des akustischen Widerstandes durch die Schalleintrittsöffnung und die Ventilationsöffnung bestimmt. Hierdurch kann wiederrum eine Anpassung der Grenzfrequenz vorgenommen werden. Vor dem Hintergrund, dass die Ventilationsöffnung bevorzugt einen deutlich geringeren Querschnitt aufweist als die Schalleintrittsöffnung, ist für die Einstellung des akustischen Widerstands des MEMS-Mikrofons die Ausgestaltung der Ventilationsöffnung wesentlich.

Der akustische Widerstand $R_{ak}$ durch die Ventilationsöffnung kann durch ein Verhältnis aus dem Schalldruck $\Delta p$ und dem Schallfluss Q angegeben, wobei der Schallfluss ein Oberflächenintegral einer Schallschnelle bezeichnet:

$$R_{ak} = \frac{\Delta P}{Q}.$$

Der akustische Widerstand ist wiederrum umgekehrt proportional zur dritten Potenz der Breite w und der Länge I der Ventilationsöffnung:

$$R_{ak} = \frac{\Delta P}{Q} \propto \frac{1}{nw^3 l},$$

wobei n die Anzahl der Ventilationsöffnungen angibt.

Die Geschwindigkeit der Fluidströmung kann durch das Verhältnis aus dem Schallfluss und der Fläche bzw. einem QuerschnittA der Ventilationsöffnung angegeben werden:

$$v = \frac{Q}{A}.$$

Die Fläche A bezeichnet insbesondere das Produkt aus Länge I und Breite w der Ventilationsöffnung:

$$A = l^* w^* n,$$

Die Geschwindigkeit ist mithin proportional zum Quadrat der Breite der Breite: and

$$v = \frac{Q}{A} \propto \Delta P \, w^2.$$

Die Geschwindigkeit v der Fluidströmung mit dem Quadrat der Breite w steigt. Demzufolge gilt auch, dass mit einer höheren Breite w der Ventilationsöffnung die Geschwindigkeit der Fluidströmung und damit auch die Modulation auf einen Wärmestrom eines thermischen Sensors ist.

Die beschriebenen Zusammenhänge gelten insbesondere für einen sogenannten AC-Fluss (engl.: *alternating current*) zu, der hierbei durch die Fluidströmung infolge des Druckunterschiedes zwischen Innenbereich und Außenbereich des MEMS-Mikrofons vorliegt.

In einer weiteren bevorzugten Ausführungsform ist das MEMS-Mikrofon dadurch gekennzeichnet, dass die Ventilationsöffnung als eine Apertur in einer Membran vorliegt, auf der sich der thermische Sensor befindet, wobei bevorzugt die Ventilationsöffnung zwischen einem Temperatursensor und einem Heizelement des thermischen Sensors vorliegt.

Hierbei ist Fluidströmung quer zu einer Ausbreitungsrichtung des Wärmestroms gerichtet. Der Wärmestrom breitet sich ausgehend vom Heizelement zum Tempertatursensor aus. Dadurch, dass die Fluidströmung für den Druckausgleich entweder vom Innenbereich in den Außenbereich oder umgekehrt von den Außenbereich in den Innenbereich strömt, steht die Ausbreitungsrichtung des Fluides im Wesentlichen senkrecht zur Ausbreitung des Wärmestroms ausgehend vom Heizelement zum Temperatursensor. Eine dem gemäße Anordnung der Richtungen der Fluidströmung und des Wärmestroms vom Heizelement zum Temperatursensor dient der Verdeutlichung des Ausdruckes "quer" in diesem Zusammenhang. Durch die Fluidströmung erfolgt eine Modulation des Wärmestroms, die durch den Temperatursensor erkannt werden kann, beispielsweise als Temperaturabfall je stärker die Fluidströmung ausfällt.

Es kann bevorzugt sein, dass die Ventilationsöffnung durch eine einzige Apertur an der Membran gebildet wird. Ein Querschnitt der Apertur entspräche damit dem Querschnitt der Ventilationsöffnung. Es kann ebenso bevorzugt sein, dass mehrere Aperturen vorliegen, welche die Ventilationsöffnung bilden. Hierbei ergibt sich der Querschnitt der Ventilationsöffnung durch die Summe der Querschnitte der Aperturen.

Die Ventilationsöffnung kann, wie weiter oben erläutert, durch eine Gitterstruktur umfassend Stege gebildet werden, wobei die Stege Zwischenbereiche bilden und die Zwischenbereiche die Aperturen bereitstellen.

Die bevorzugte Ausführungsform zur Bereitstellung der Ventilationsöffnung ist vorteilhafterweise besonders prozesseffizient bereitzustellen, da eine oder mehrere Aperturen mit einfachen und etablierten Verfahren an der Membran angebracht werden können, auf der der thermische Sensor platziert werden soll. Darüber hinaus kann eine Modulation eines von einem bevorzugten Heizelement bereitgestellten Wärmestroms quer zu einer Strömungsrichtung der Fluidströmung erfolgen, da eine Fluidströmung über die Ventilationsöffnung in den Innenbereich hinein oder in den Außenbereich hinaus ermöglicht wird. Weiterhin ist die Einbringung eines bevorzugten Trägers, auf dem sich die Membran mit einer eingebrachten Apertur als Ventilationsöffnung befindet, einfach in ein Gehäuse zu integrieren, um eine Trennung zwischen dem Innen- und Außenbereich ermöglichen zu können.

In bevorzugten Ausführungsformen kann die Apertur auch in Form eines Schlitzes beispielsweise mit einer Länge (in untenstehenden Abbildungen in der Zeichnungstiefe) von mehr als 100 μm oder mehr als 1 mm aufweisen, während eine Breite der Apertur weniger als 20 μm, bevorzugt weniger als 10 μm aufweisen. Die Breite bezeichnet hierbei bevorzugt eine Dimension in einer (Querschnittsebene), welche senkrecht zu einem Vektor der Geschwindigkeit der Fluidströmung steht und die kleinste Dimensionierung der Ventilationsöffnung darstellt. Die Länge bezeichnet eine Dimension in der Querschnittsebene senkrecht zur Breite zum Geschwindigkeitsvektor der Fluidströmung bezeichnet.

In bevorzugten Ausführungsformen können zwei Temperatursensoren bereitgestellt werden, nämlich ein erster und ein zweiter Temperatursensor, welche beabstandet zum Heizelement angeordnet sind. Die Ventilationsöffnung befindet sich beispielsweise zwischen dem Heizelement und dem ersten Temperatursensor. Durch die Fluidströmung erfolgt eine derartige Modulation des Wärmestroms, dass somit an dem ersten Temperatursensor ein (erster) Wärmestrom detektiert werden kann, welcher über eine geringere Intensität verfügt als ein (zweiter) Wärmestrom, welcher vom zweiten Temperatursensor erkannt wird und nicht durch den Fluidstrom moduliert wird. In bevorzugten Ausführungsformen können auch 2, 3, 4, 5, 10 oder mehr derartige Paare von Temperatursensoren angeordnet werden, beispielsweise falls die Apertur in Form eines länglichen Schlitzes ausgestaltet ist mit einer Länge (in den untenstehenden Figuren in der Zeichnungstiefe) von mehr als 100 μm, bevorzugt mehr als 1 mm.

In einer weiteren bevorzugten Ausführungsform ist das MEMS-Mikrofon dadurch gekennzeichnet, dass die Ventilationsöffnung als ein Kanal vorliegt, in oder an welchem der Sensor eingebracht vorliegt, wobei bevorzugt der Sensor ein thermischer Sensor ist, wobei besonders bevorzugt der thermische Sensor entlang des Kanals einen ersten Temperatursensor zur Messung einer ersten Temperatur und einen zweiten Temperatursensor zur Messung einer zweiten Temperatur sowie ein Heizelement umfasst, wobei das Heizelement zwischen dem ersten Temperatursensor und dem zweiten Temperatursensor angeordnet ist. Die Ventilationsöffnung wird in dieser Ausführungsform durch den offenen Querschnitt des Kanals, insbesondere in Höhe des thermischen Sensors gebildet.

Der Kanal bezeichnet bevorzugt einen räumlichen Abschnitt, der als ein länglicher Abschnitt des Gehäuses gebildet wird. Hierfür kann bevorzugt das Gehäuse einen Teilabschnitt als dessen Umrandung umfassen. Der längliche Abschnitt meint bevorzugt, dass eine Länge, d. h. eine Dimension entlang Strömungsrichtung des Fluides, größer ist eine Breite und/oder Höhe, d. h. zu im Wesentlichen orthogonalen Richtungen zur Strömungsrichtung des Fluides. Die Länge des Kanals kann bevorzugt um einen Faktor 1,5, 2, 3, 4, 5, 10 oder mehr größer sein als eine Breite und/oder Höhe. Innerhalb des Kanals kann der thermische Sensor eingebracht sein, wodurch die Fluidströmung detektiert werden kann. Die Ventilationsöffnung liegt entsprechend als ein Teilabschnitt des Kanals vor, der zwischen dem thermischen Sensor und dem Gehäuse übrigbleibt. Innerhalb des Kanals liegt eine vertikale Erstreckung mindestens einer Komponente des MEMS-Mikrofons vor, beispielsweise des Trägers, auf dem bevorzugt eine Membran zur Positionierung des thermischen Sensors vorliegt, sodass der verbleibende Anteil des räumlichen Abschnitts für die Ventilationsöffnung eingesetzt wird. Insbesondere ist bei der Bereitstellung des Kanals als ein länglicher Abschnitt die Fluidströmung längs zu einer Ausbreitung des Wärmestroms ausgehend von einem Heizelement zu einem oder mehreren Temperatursensoren. Mit anderen Worten, erlaubt es die Bereitstellung der Ventilationsöffnung durch einen Kanal insbesondere, dass die Fluidströmung über dem thermischen Sensor in Richtung des Wärmestroms fließen kann. Mithin ist mit einer Ausbreitung des Wärmestroms entlang der Richtung des Fluss bzw. der Strömung bevorzugt gemeint, dass ein Richtungsvektor der Fluidströmung im Wesentlichen parallel zu einer Ausbreitungsrichtung des Wärmestroms steht.

Während, wie obig erläutert, für die Bereitstellung einer Ventilationsöffnung durch eine Apertur in einer Membran bevorzugt ein Wärmestrom quer zur Fluidströmung moduliert wird, wird bei dieser Ausführungsform durch einen Kanal für die Bereitstellung einer Ventilationsöffnung bevorzugt der Wärmestrom in Richtung der Fluidströmung moduliert.

Der thermische Sensor kann bevorzugt einen ersten Temperatursensor und zweiten Temperatursensor sowie ein dazwischenliegendes Heizelement umfassen. So kann bei einer Fluidströmung vom Außenbereich in den Innenbereich des MEMS-Mikrofons der erste Temperatursensor von der Fluidströmung zunächst passiert werden, bevor die Fluidströmung über das Heizelement zum zweiten Temperatursensor strömt. Dies hat zur Folge, dass ein Wärmestrom entlang der Fluidströmung begünstigt wird, sodass der Wärmestrom ausgehend vom Heizelement in Richtung des zweiten Temperatursensors höher ausfällt als in Richtung des ersten Temperatursensors (entgegen der Fließrichtung des Fluides). Die am zweiten Temperatursensor messbare Temperatur wird somit höher sein als am ersten Temperatursensor. Eine Differenzmessung der Temperaturen des ersten und zweiten Temperatursensors bzw. die Ausprägung des Unterschiedes ermöglicht wiederrum Rückschlüsse auf Parameter der Schallwellen, durch welche die Fluidströmung resultierte. Bei einer Fluidströmung von dem Innenbereich in den Außenbereich würde entsprechend die Fluidströmung einen Wärmestrom ausgehend vom Heizelement zum zweiten Temperatursensor begünstigen. Ein entsprechend umgekehrter Temperaturunterschied zwischen dem zweiten Temperatursensor und dem ersten Temperatursensor ist feststellbar. Durch die differentielle Messung können vorteilhafterweise besonders zuverlässige Ergebnisse erhalten werden, da beispielsweise Temperaturschwankungen, welche beiden Temperatursensoren gleichermaßen betreffen, ausgemittelt werden können.

Mit einem Kanal ist insbesondere eine Strömungsstrecke gemeint, entlang derer sich eine Fluidströmung zum Druckausgleich zwischen einem Innen- und Außenbereich ausbreiten kann, sodass ein thermischer Sensor derart in den Kanal positioniert werden kann, dass eine Modulation eines Wärmestroms in Richtung der Fluidströmung messbar ist.

Der Kanal kann beispielweise durch parallele Längsabschnitte des Gehäuses gebildet werden, welche eine längliche Fluidkommunikation zwischen einem Außen- und Innenbereich des Gehäuses ermöglichen. Ein thermischer Sensor kann entsprechend derart in den Kanal positioniert werden, dass der verbleibende Bereich zwischen dem thermischen Sensor und den Seitenwänden des Kanals eine Ventilationsöffnung bildet. Der Querschnitt des verbleibenden Bereichs entspricht mithin dem Querschnitt der Ventilationsöffnung. Die Länge des Kanals wird bevorzugt derart gewählt, dass ein thermischer Sensor innerhalb des Kanals positioniert werden kann.

In bevorzugten Ausführungsformen kann der Kanal beispielsweise eine Länge von einem Bereich von 10 $\mu$m bis 500 $\mu$m, vorzugweise 20 $\mu$m - 400 $\mu$m, oder auch 50 $\mu$m - 200 $\mu$m. Die Höhe des Kanals liegt vorzugsweise in einem Bereich zwischen 2 $\mu$m - 100 $\mu$m, besonders bevorzugt zwischen 5 - 50 $\mu$m.

Die Breite des Kanals liegt vorzugsweise von 1 $\mu$m - 1 mm, bevorzugt von 5 $\mu$m - 100. In den Querschnittsansichten der unten aufgeführten Figuren sind Länge bzw. Höhe schematisch (nicht zwangsläufig skalengetreu) dargestellt, während die Dimension der Breite einer (nicht sichtbaren) Zeichnungstiefe der Abbildungen entspricht.

Wie obig ausgeführt, liegt bevorzugt die Ventilationsöffnung als ein Teilabschnitt bzw. verbleibender Bereich des Kanals vor, der zwischen dem thermischen Sensor und dem Gehäuse übrigbleibt. Insbesondere ist der verbleibende Bereich der Raumbereich des Kanals, der zwischen dem thermischen Sensor und/oder Komponenten, auf denen der thermische Sensor angebracht ist und dem Gehäuse, insbesondere den Abschnitten des Gehäuses, vorliegt, welche den Kanal bereitstellen.

In der bevorzugten Ausführungsform, in der sich die Ventilationsöffnung am Gehäuse befindet bzw. durch ein Kanal gebildet wird und damit die Fluidströmung längs dem Wärmestrom strömt, kann das Ausgangssignal des thermischen Sensors als Sensor die im Wesentlichen gleiche Frequenz haben wie die Schallwellen, welche zur Fluidströmung führten. Bei einer bevorzugten Apertur an einer Membran zur Bereitstellung der Ventilationsöffnung, bei dem die Fluidströmung quer zu einem Wärmestrom eines thermischen Sensors strömen würde, wäre die Frequenz des Ausgangssignales bevorzugt im Wesentlichen doppelt so hoch wie Frequenz der Schallwellen, d. h. das Ausgangssignal würde eine Frequenz von ca. 2f aufweisen (f steht für die Frequenz der Schallwellen).

In einer weiteren bevorzugten Ausführungsform ist das MEMS-Mikrofon dadurch gekennzeichnet, dass ein Diaphragma eine Aussparung des Gehäuses überspannt, sodass bei der Detektion von Schallwellen das Diaphragma auslenkbar ist.

Das Diaphragma bezeichnet eine Komponente des MEMS-Mikrofons, welches infolge von Schallwellen eine Auslenkung erfahren kann. Bevorzugterweise befindet sich das Diaphragma innerhalb einer Aussparung des Gehäuse oder wird durch einen Abschnitt des Gehäuses gebildet, der im Vergleich zum übrigen Gehäuse eine geringere Steifigkeit aufweist. Die geringere Steifigkeit kann beispielsweise dadurch ermöglicht werden, dass ein Teilabschnitt des Gehäuses eine gegenüber dem restlichen Abschnitt des Gehäuses geringere Dicke aufweist.

In bevorzugten Ausführungsformen wird das Diaphragma durch eine dünnschichtige Schallmembran gebildet, welche innerhalb einer Aussparung des Gehäuses platziert ist. Die Schallmembran ist bevorzugt für eine Aufnahme von Schallwellen ausgelegt. Die Schallmembran ist bevorzugt hinreichend dünn, sodass sie sich unter dem Einfluss der von den Schallwellen verursachten Druckänderungen durchbiegt und in ein Schwingungsverhalten übergeht. Mithin resultiert durch Schallwellen, welche auf das MEMS-Mikrofon treffen, eine Schwingung der Schallmembran.

Das bevorzugte Diaphragma als zusätzliche Komponente am Gehäuse wirkt vorteilhafterweise als Kompensator für Schallwellen, sodass die Sensitivität des MEMS-Mikrofons optimiert werden kann. Mithin kann vorteilhafterweise der Einfluss von tieffrequenten Schallereignissen, wie z. B. Türgeräusche, Windgeräusche und/oder Ploppgeräusche, verringert und damit ein verbessertes Klangbild der Schallwellen erlangt werden.

Durch die Auslenkung und dadurch resultierende Schwingung des Diaphragmas kann zudem vorteilhaft neben dem Messsignal, welches vom thermischen Sensor erfasst werden kann, ein zusätzliches Messsignal aufgegriffen werden. Während das Messsignal des thermischen Sensors eine Folge der Fluidströmung ist, ergibt sich ein Messsignal eines Diaphragmas durch die Druckschwankungen der Schallwellen, welche auf das MEMS-Mikrofon treffen. Mithin kann der thermische Sensor beim Aufweisen eines Diaphragmas sowohl eine strömungsbasierte Messung durch die Fluidströmung als auch eine druckbasierte Messung durch Schwingungen des Diaphragmas vornehmen. Hierdurch kann ein verbesserter Rückschluss auf Schallparameter der Schallwellen genommen werden. Das zweite Messsignal durch das Diaphragma kann über verschiedene Wirkprinzipen erfasst werden, wie im Folgenden näher verdeutlicht wird.

In einer weiteren bevorzugten Ausführungsform ist das MEMS-Mikrofon dadurch gekennzeichnet, dass das MEMS-Mikrofon ein Diaphragma umfasst, sodass bei der Detektion von Schallwellen durch eine Auslenkung des Diaphragmas ein zweites Messsignal erfassbar ist, vorzugsweise auf Basis eines kapazitiven oder piezoelektrisch Messprinzips.

Mit dem zweiten Messsignal ist hierbei ein Messsignal über die Schallwellen gemeint, welches durch die Auslenkung des Diaphragmas in Folge der Schallwellen resultiert, welches zusätzlich zum (ersten) Messsignal des thermischen Sensors gegeben ist. Anders ausgedrückt, ist ein erstes Messsignal durch den thermischen Sensor des MEMS-Mikrofons erfassbar, beispielsweise durch eine Modulation eines Wärmestroms, welche durch eine Fluidströmung durch die Ventilationsöffnung resultiert. Ein zweites Messsignal kann durch eine Auslenkung des Diaphragmas erfasst werden, insbesondere durch die Ausübung eines Schalldruckes oder Schalldruckpegels der Schallwellen.

Dadurch stellt das MEMS-Mikrofon zwei Messsignale bereit, welche Rückschlüsse auf die Schallwellen zulassen.

Während das erste Messsignal mithin Schall auf Basis einer Messung der Bewegung von Partikeln bzw. einer Messung der Fluidströmung basiert, erfasst das zweite Messignal den Schall als Druckschwankung, welche zu Auslenkungen der Membran führt.

Vorteilhafterweise ergänzen sich das (erste) Messsignal des thermischen Sensors und das zweite Messsignal durch eine Auslenkung des Diaphragmas in Bezug auf deren Sensitivität in unterschiedlichen Frequenzbereichen. Während wie obig erläutert, mittels des ersten Messsignals durch den thermischen Sensor vorteilhaft auch niederfrequenter Schall, insbesondere auch unterhalb von 100 Hz, bevorzugt sogar unterhalb von 20 Hz zuverlässig detektiert werden können, kann mit Hilfe des zweiten Messsignals, welches auf der Auslenkung des Diaphragmas basiert, zuverlässig auch Schall mit Frequenzen von mehr als 1 kHz, mehr als 10 kHz oder auch Ultraschall (mehr als 20 kHz) besonders zuverlässig vermessen werden.

Eine etwaig limitierte obere Grenzfrequenz, welche die Sensitivität des thermischen Sensors für Messungen höher frequenter Schallmessung begrenzt, kann vorteilhaft durch Bereitstellung eines auslenkbaren Diaphragmas kompensiert werden.

Mithin kann durch das MEMS-Mikrofon ein größeres Frequenzband abgedeckt werden, was eine vielseitige Nutzungsmöglichkeit hinsichtlich unterschiedlicher Frequenzbereiche zulässt.

Das zweite Messsignal wird bevorzugterweise kapazitiv oder piezoelektrisch oder optisch oder piezoresistiv erfasst.

Bei einer kapazitiven Auslesung bzw. Erfassung wird ein kapazitives Messprinzip verwandt, beispielsweise indem eine Auslenkung des Diaphragmas gegenüber einer Rückplatte erfasst wird. In einer weiteren bevorzugten Ausführungsform ist das MEMS-Mikrofon dadurch gekennzeichnet, dass für eine Aufnahme des zweiten Messsignals beabstandet zum Diaphragma eine Rückplatte ortsfest angebracht ist, sodass ein Abstand zwischen dem Diaphragma und der Rückplatte durch Schallwellen variierbar und Kapazitätsänderungen messbar sind, wobei die Rückplatte vorzugsweise perforiert ist und sich über dem gesamten Diaphragma erstreckt.

Die obig aufgeführte Ausführungsform ermöglicht eine kapazitive Auslesung der auftreffenden Schallwellen. Die ortsfeste Anbringung der Rückplatte meint insbesondere, dass die Rückplatte fest positioniert ist und insbesondere sich durch auftreffende Schallwellen bzw. der Fluidströmung nicht verschiebt. Hingegen ist das Diaphragma auslenkbar beim Auftreffen der Fluidströmung bzw. der Schallwellen. Hierdurch treten Abstandsvariationen zwischen dem Diaphragma und der Rückplatte auf, wenn Schallwellen auf das Diaphragma treffen und die Druckänderungen zu Auslenkungen bzw. Auswölbungen führen. Die Anordnung umfassend Diaphragma und Rückplatte kann in erster Näherung als ein Plattenkondensator beschrieben werden. Mithin ist bei einer Verringerung des Abstandes die Kapazität höher und bei einer Erhöhung des Abstandes die Kapazität entsprechend geringer. Über die Kapazität kann ein elektrisches Messsignal ausgelesen werden, welches anhand gemessener Kapazitätsänderungen aufgrund von Abstandsvariationen Rückschlüsse auf Schallparameter, wie z. B. den Schalldruckpegel, zulässt. Hierbei liegt bevorzugt ein oder mehrere elektrische Kontaktpads vor, um ein elektrisches Messsignal auf Basis der Kapazitätsänderung abgreifen zu können. Bevorzugt tritt infolge der Schwingungen des Diaphragmas eine oszillierende Kapazitätsänderung auf, welche über den einen oder mehreren Anschlusspads für einen oszillierenden elektrischen Strom abgegriffen werden kann.

Bevorzugt ist die Rückplatte perforiert. Mit dem Ausdruck "perforiert" ist bevorzugt das Aufweisen von Perforationen an der Rückplatte gemeint, wobei Perforationen Öffnungen bezeichnen. Perforationen ermöglichen einen Schalldurchlass, welche einen weiteren Druckausgleich zulassen, sodass auch hohe besonders hohe Schalldruckpegel erfasst werden können, ohne dass es zu einem Kontakt zwischen dem Diaphragma und der Rückplatte kommt. Die Perforationen an der Rückplatte bewirken eine Dämpfung für die an dem Diaphragma auftreffenden Schallwellen.

Mit einer piezoelektrischen Erfassung oder Auslesung ist ein piezoelektrisches Messprinzip gemeint. So kann es bevorzugt sein, dass das Diaphragma ein piezoelektrisches Material umfasst. Infolge der Auslenkbarkeit des Diaphragma kommt es zu einer Formänderung des piezoelektrischen Materials, sodass sich eine elektrische Spannung bildet, die abgegriffen werden kann und einen Rückschluss auf den Schalldruck bzw. Schalldruckpegel zulässt, die zur Formänderung des Diaphragmas führte.

In einer weiteren bevorzugten Ausführungsform ist das MEMS-Mikrofon dadurch gekennzeichnet, dass das MEMS-Mikrofon ein Diaphragma aus einem elektrisch leitfähigen und/oder dielektrischen Material umfasst, wobei bevorzugt ein Material für das Diaphragma ausgewählt ist aus einer Gruppe umfassend das elektrisch leitfähige Material ausgewählt ist aus einer Gruppe umfassend Silizium, insbesondere Monosilizium oder Polysilizium, Aluminium, Nickel, Kupfer, Titan, Silber und/oder Gold, das optional in Kombination mit einem dielektrischen Material eingesetzt wird, wobei bevorzugt das dielektrische Material mit einer oder mehreren Elektroden kontaktiert ist.

Die genannten elektrisch leitfähigen Materialien eignen sich vorteilhafterweise besonders gut, um eine kapazitive Auslesung der auftreffenden Schallwellen am Diaphragma zu ermöglichen. Bei den elektrisch leitfähigen Materialien bildet sich ein elektrisches Feld zwischen dem Diaphragma und einer Rückplatte, sodass die Abstandsvariationen zu Änderungen der Kapazität führen. Umfasst das Diaphragma ein dielektrisches Material, werden vorzugsweise eine oder mehrere Elektroden angebracht, über die eine kapazitive Auslesung ermöglicht wird. Die Anbringung von eine oder mehreren Elektroden ist ebenfalls bevorzugt, wenn das Diaphragma bevorzugterweise ein dielektrisches Material umfasst, durch welches die Auslesung ermöglicht wird.

In einer weiteren bevorzugten Ausführungsform ist das MEMS-Mikrofon dadurch gekennzeichnet, dass das MEMS-Mikrofon ein Diaphragma umfasst, welches durch Schallwellen auslenkbar ist, wobei das Diaphragma eine Membran umfasst, auf welcher der thermische Sensor angebracht ist und die Ventilationsöffnung als eine Apertur in der Membran vorliegt.

In der Ausführungsform kann vorteilhafterweise ein erstes (Schall-)Messsignal in Abhängigkeit einer Fluidströmung durch die Ventilationsöffnung, als auch ein zweites Schall-)Messsignal in Abhängigkeit einer Auslenkung der Diaphragmas durch eine einzelne Baukomponente erfasst werden. Das auslenkbare Diaphragma kann mithin bevorzugt gleichzeitig als (thermische) Membran für den thermischen Sensor dienen. Mithin wird über eine einzelne Komponente ein erstes Messsignal durch den thermischen Sensor, welcher an der Membran angebracht ist, und ein zweites Messsignal durch eine Auslenkung des Diaphragmas ermöglicht. Mit anderen Worten ausgedrückt, werden in der beschriebenen Ausführungsform eine Schallmessung durch Auslenkungen eines Diaphragmas sowie die Schallmessung mittels eines thermischen Sensors miteinander kombiniert. Vorteilhafterweise lässt sich das Frequenzband, in dem Schallmessungen vorgenommen werden können, verbreitern, sodass der Messbereich erfassbarer Schallereignisse erweitert wird. Insbesondere wird eine Verschiebung einer oberen Grenzfrequenz in positiver Richtung erlangt, sodass neben besonders geringen Frequenzen auch hohe Frequenzen zuverlässig detektiert werden können.

Die obige beschriebenen bevorzugten Merkmale hinsichtlich der Bereitstellung eines bevorzugten thermischen Sensors zur Messung einer Fluidströmung durch eine Apertur, als auch eines auslenkbaren Diaphragmas durch beispielsweise eine piezoelektrische oder kapazitive Messung gelten analog.

So kann es beispielsweise bevorzugt sein, dass der thermische Sensor auf einem Diaphragma, welches vorzugsweise als Membran vorliegt, angebracht ist. Die Membran ist vorzugsweise auf einem Träger angebracht. Der thermische Sensor kann bevorzugt einen Temperatursensor und ein Heizelement umfassen. Die Ventilationsöffnung liegt vorzugsweise an der Membran vor und ist zwischen dem Heizelement und dem Temperatursensor angebracht. Eine Rückplatte kann sich bevorzugt beabstandet zur Membran befinden, sodass das Diaphragma als Membran für eine kapazitive Auslesung durch die Abstandsvariation zwischen der Membran und der Rückplatte ausgelegt ist. Vorteilhaft können hierdurch zwei Messsignale erfasst werden, nämlich einerseits ein Messsignal durch die Fluidströmung über den thermischen Sensor und andererseits eine Druckmessung durch die Schallwellen, welche zu Auslenkungen der Membran führen.

In einer weiteren bevorzugten Ausführungsform umfasst das MEMS-Mikrofon eine elektronische Schaltung. Die elektronische Schaltung kann bevorzugt ausgewählt sein aus einer Gruppe umfassend einen ASIC (engl. *application-specific integrated circuit,* deutsch anwendungsspezifische integrierte Schaltung), eine Recheneinheit, eine integrierte Schaltung (IC), eine programmierbare logische Schaltung (PLD), ein Field Programmable Gate Array (FPGA), einen Mikroprozessor, einen Mikrocomputer, eine speicherprogrammierbare Steuerung und/oder sonstige elektronische Schaltungselemente umfassen.

Die elektronische Schaltung ist bevorzugt dazu konfiguriert, eine Ansteuerung und/oder Auslesung des thermischen Sensors und/oder des Diaphragmas vorzunehmen. Eine Ansteuerung des thermischen Sensors kann beispielsweise die Bereitstellung des Wärmestroms betreffen, insbesondere durch eine Ansteuerung des Heizelementes. Eine Auslesung des thermischen Sensors umfasst beispielsweise eine Temperaturmessung an einem ersten und/oder zweiten Temperatursensor und damit eine Erfassung der Modulation des Wärmestroms durch die Fluidströmung. Eine Ansteuerung des Diaphragmas kann beispielsweise eine Einstellung der Steifigkeit bzw. Auslenkbarkeit und/oder eine Grundauslenkung in Bezug auf eine Ausganglage des Diaphragmas betreffen. Eine Auslesung des Diaphragmas umfasst bevorzugt eine Erkennung einer Auslenkung des Diaphragmas, um beispielsweise hierüber auf Schallparameter der Schallwellen zurückschließen zu können.

Bevorzugt liegt eine elektrische Verbindung zwischen der elektronischen Schaltung und dem Diaphragma und/oder dem thermischen Sensor vor. Die elektrische Verbindung kann beispielsweise gebildet werden durch Drähte, insbesondere Bonddrähte, Leiterbahnen, Leiterbahnstreifen und/oder Durchkontaktierungen. Weiterhin ist es bevorzugt, dass die elektronische Schaltung innerhalb des Gehäuses vorliegt. Hierdurch kann eine einfache und kompakte Bereitstellung der elektrischen Verbindung zur elektronischen Schaltung ermöglicht werden.

In einem weiteren Aspekt betrifft die Erfindung einen photoakustischen Gassensor umfassend einen modulierbaren Emitter und eine mit einem Gas befüllbare Sensorkammer, wobei die Sensorkammer im Strahlengang des Emitters vorliegt, sodass der Emitter mittels modulierbar emittierbarer Strahlung das Gas in der Sensorkammer zur Ausbildung von Schallwellen anregen kann, wobei die Sensorkammer einen Sensor und ein Gehäuse umfasst, wobei das Gehäuse einen Innenbereich der Sensorkammer umschließt und die Sensorkammer eine Ventilationsöffnung aufweist, welche eine Fluidkommunikation zwischen dem Innenbereich und einem Außenbereich der Sensorkammer ermöglicht, wobei der Sensor ein thermischer Sensor ist, welcher dazu konfiguriert ist, Schallwellen, welche zu einer Druckdifferenz zwischen dem Innenbereich und dem Außenbereich der Sensorkammer führen, anhand einer Fluidströmung durch die Ventilationsöffnung zu messen.

Der durchschnittliche Fachmann erkennt, dass der erfindungsgemäße photoakustischen Gassensor und das MEMS-Mikrofons auf demselben erfinderischen Gedanken beruhen. Bei dem MEMS-Mikrofon definiert ein Gehäuse des MEMS-Mikrofons einen Innenbereich und einen Außenbereich, wobei eine Ventilationsöffnung eine Fluidkommunikation ermöglicht und ein thermischer Sensor bereitgestellt wird, um anhand einer Fluidströmung durch eine Ventilationsöffnung ein Schallereignis in einer Umgebung des MEMS-Mikrofons (d. h. außerhalb) des Gehäuses zu detektieren.

Bei dem photoakustischen Gassensor definiert hingegen ein Gehäuse einer Sensorkammer einen Innenbereich und einen Außenbereich, wobei eine Ventilationsöffnung (in der Sensorkammer) eine Fluidkommunikation ermöglicht und ein thermischer Sensor bereitgestellt wird, um anhand einer Fluidströmung durch eine Ventilationsöffnung ein Schallereignis (ein PAS-Signal) im Innenbereich der Sensorkammer zu detektieren.

Der Fachmann erkennt weiter, dass technische Merkmale, Definitionen und Vorteile des erfindungsgemäßen MEMS-Mikrofons und von dessen bevorzugten Ausführungsformen, welche dafür offenbart wurden, gleichermaßen für den erfindungsgemäßen photoakustischen Gassensor gelten, und umgekehrt. So kann beispielsweise eine Ventilationsöffnung für die Sensorkammer auf analoge Weise durch eine Apertur in einer Membran gebildet werden, welche eine Schalleintrittsöffnung bzw. Auslassung in dem Gehäuse überspannt. Ebenso gelten beispielsweise Ausführungen zur Bereitstellung eines thermischen Sensors, einer (thermischen) Membran, eines Gehäuses, auslenkbarer Diaphragmen etc., welche für das MEMS-Mikrofon offenbart wurden, analog für den Gassensor (insbesondere dessen Sensorkammer) und sollen lediglich zur Vermeidung von Wiederholungen nicht nochmals aufgeführt werden. Weiterhin kann der photoakustische Gassensor bevorzugt eine elektronische Schaltung umfassen. Die elektronische Schaltung kann bevorzugt dazu eingerichtet sein, den thermischen Sensor, ein Diaphragma und/oder einen modulierbaren Emitter anzusteuern und/oder auszulesen.

Die Erfindung ermöglicht somit vorteilhafterweise ebenfalls eine alternative Bereitstellung eines photoakustischen Gassensors, der in der Lage, besonders niedrige Frequenzen, insbesondere im Infraschallbereich, zu erfassen, was in der photoakutischen Spektroskopie besonders relevant ist.

Ein photoakustischer Gassensor ist dem Fachmann dabei in seinen Grundzügen bzw. wesentlichen Komponenten bekannt. Ein modulierbarer Emitter erzeugt elektromagnetische Strahlung und ist bevorzugt so angeordnet und konfiguriert, dass die von dem Emitter emittierte Strahlung im Wesentlichen oder zumindest teilweise auf ein zu analysierendes Gas in einem Analysevolumen trifft.

Erfolgt die modulierte Bestrahlung mit einer Wellenlänge, welche dem Absorptionsspektrum eines in dem Gasgemisch befindlichen Moleküls einer Gaskomponente entspricht, findet eine modulierte Absorption statt, die zu Erwärmungs- und Abkühlungsprozessen führt, deren Zeitskalen die Modulationsfrequenz der Strahlung widerspiegeln. Gemäß dem photoakustischen Effekt führen die Erwärmungs- und Abkühlungsprozesse zu Expansionen und Kontraktionen der Gaskomponente, wodurch diese zur Ausbildung von Schalldruckwellen mit im Wesentlichen der Modulationsfrequenz angeregt wird. Die Schalldruckwellen werden auch als PAS-Signale bezeichnet und lassen sich mittels eines thermischen Sensors messen. Der Druck der Schallwellen, die durch die modulierte Absorption resultieren, ist direkt proportional zur Konzentration des zu detektierenden bzw. der absorbierenden Gaskomponente.

In bevorzugten Ausführungsformen umfasst der photoakustischer Gassensor einen optischen bzw. spektralen Filter, der im Strahlengang des Emitters vorliegt, so dass beim Einschalten des Emitters in der Sensorkammer, die dem gefilterten Licht entsprechende Gaskomponente angeregt wird und einen Druck proportional zur Konzentration der Gaskomponente in der Sensorkammer entsteht. Die Modulation mittels des IR-Emitters erzeugt hierbei einen periodischen Schalldruck in der Sensorkammer, der anhand einer Fluidströmung durch die Ventilationsöffnung in den Außenbereich ein mithilfe des thermischer Sensors gemessen wird.

Verschiedene Emitter kommen bevorzugt als Strahlungsquelle für die genannten Anwendungen in Frage. Als Emitter können beispielsweise thermische Emitter, ein Laser, eine LED oder eine Infrarotlichtquelle eingesetzt werden.

Der Emitter ist modulierbar, das bedeutet vorzugsweise, dass die Intensität der emittierten Strahlung, bevorzugt die Intensität des Strahls im zeitlichen Verlauf kontrollierbar geändert werden kann. Die Modulation soll bevorzugt eine zeitliche Änderung der Intensität als messbare Größe hervorrufen. Das bedeutet z. B., dass die Intensität im zeitlichen Verlauf zwischen der innerhalb des Messzeitraums gemessenen schwächsten Intensität und der innerhalb desselben Zeitraums gemessenen stärksten Intensität ein Unterschied vorliegt, der größer ist als die Sensibilität eines für das Strahlungsspektrum und die Anwendung typischerweise verwendeten Geräts zur Messung oder Bestimmung der Intensität. Bevorzugt ist der Unterschied deutlich größer als ein Faktor 2, mehr bevorzugt 4, 6 oder 8 zwischen der stärksten und der schwächsten einstellbaren Intensität. Besonders bevorzugt erfolgt die Modulation der Intensität des modulierten Strahles für eine oder mehrere vorbestimmte Resonanzwellenlängen.

Ein modulierbarer Emitter bezeichnet somit bevorzugt eine Vorrichtung, die elektromagnetische Strahlung in einem Wellenlängenbereich innerhalb eines bestimmten Spektrums aussendet. Das Spektrum ist insbesondere so gewählt, dass es dem bevorzugten Anwendungsgebiet des Emitters, nämlich der PAS entspricht. Dabei ist insbesondere die Schwingungsanregung der zu spektroskopierenden und/oder zu detektierenden Gasmoleküle in dem Referenzgas bevorzugt, welche je nach Gasmolekül einem bevorzugten spektralen Bereich entsprechen.

Vorzugsweise liegt die Sensorkammer im Strahlengang des Emitters vor. Das bedeutet bevorzugt, dass die Intensität des Strahls im Wesentlichen oder zumindest teilweise auf die dem Emitter zugewandte Seite der Sensorkammer trifft. Teilweise bedeutet bevorzugt zu mindestens 40 %, bevorzugt mindestens 50 %, 60 % oder mehr.

In einer bevorzugten Ausführungsform stellt die Sensorkammer ein offenes System dar, welches eine oder mehrere Öffnungen aufweist, sodass ein zu analysierendes Gas in die Sensorkammer einströmen oder diffundieren kann. Bei der einen oder mehreren Öffnungen kann es sich um die Ventilationsöffnung handeln oder aber eine zusätzliche Öffnung liegt in der Sensorkammer vor.

Je nach Messmethode der PAS kann dabei die (zusätzliche) Öffnung bevorzugt wiederverschließbar gestaltet werden, wodurch das Gas austauschbar sein kann. Es kann jedoch ebenso bevorzugt sein, die Kammer einmalig, z. B. während der Herstellung, mit einem Referenzgas zu befüllen und danach nicht mehr auszutauschen bzw. nachzufüllen. Vorzugsweise kann auch ein Gasfluss realisiert werden, indem die Detektionskammer z. B. mindestens zwei Öffnungen umfasst.

Es kann bevorzugt über bspw. eine erste Öffnung als Zulauf und eine zweite Öffnung als Ablauf entweder ein kontinuierlicher Gasfluss in die Sensorkammer realisiert werden oder ein diskontinuierlicher Gasfluss, bei dem z. B. während einer Befüllungs- bzw. Gasaustauschphase. In einer Messphase kann bspw. der Gasfluss unterbrochen werden. Es können vorzugsweise zu verschiedenen Zeitpunkten verschiedene Gase analysiert werden, wobei bevorzugt zwischen zwei zu analysierenden Gasen kann ein Reinigungsgas zur Reinigung des Volumens von etwaigen Gasrückständen zugeführt werden.

Ist die Detektionskammer gegenüber der Umgebung zumindest teilweise geöffnet, z. B. durch eine wunschgemäß dimensionierte Öffnung, kann vorteilhafterweise ein permanenter Gasaustausch mit einer Umgebung stattfinden, wobei eine Befüllung der Detektionskammer durch Wechselwirkung mit einer Gasatmosphäre der Umgebung stattfindet.

Vorzugsweise ist das Spektrum des modulierbaren Emitters und/oder eines optischen Filters auf die Anregungsfrequenz des in der Sensorkammer zu detektierenden Gaskomponente abgestimmt.

In einer bevorzugten Ausführungsform ist der photoakustische Gassensor dadurch gekennzeichnet, dass die Sensorkammer mit einem Referenzgas gefüllt ist und ein zu analysierendes Gas im Strahlengang zwischen dem Emitter und der Sensorkammer vorliegt, sodass ein Anteil des Referenzgases im zu analysierenden Gas anhand der Ausbildung von Schalldruckwellen in der Sensorkammer durch den thermischen Sensor messbar ist.

Der photoakustische Sensor ist somit dazu ausgelegt, eine Gaskomponente zu detektieren, welches sich zwischen einer Messstrecke zwischen dem modulierbaren Emitter und der Sensorkammer befindet.

Gelangt ein Molekül in den Strahlengang zwischen der Sensorkammer und dem modulierbaren Emitter, welches einem Molekül des Referenzgases entspricht, findet eine mindestens teilweise modulierte Absorption der Strahlung statt. Dadurch ist die die Intensität der Strahlung, welche auf die Sensorkammer trifft, für den Wellenlängenbereich des Absorptionsspektrums von Molekülen des Referenzgases vermindert. Entsprechend sind auch die Schalldruckwellen innerhalb der Sensorkammer reduziert, welche durch eine Anregung der Moleküle des Referenzgases resultieren. Als Folge wird eine reduziertes bzw. abgeschwächtes PAS-Signal durch den thermischen Sensor. Das Ausmaß der Reduktion bzw. Abschwächung erlaubt entsprechend einen Rückschluss auf den Anteil des Referenzgases, welches sich im Strahlengang bzw. der Messstrecke befindet.

Wie obig erläutert, kann mittels eines thermischen Sensors bevorzugt umfassend ein Heizelement und mindestens einen Temperatursensor anhand einer Messung der Modulation eines Wärmestroms aufgrund der Fluidströmung, Rückschlüsse auf das Schallereignis bzw. PAS-Signal gezogen werden. Aufgrund der hohen Sensitivität kann durch dieses Messprinzip vorteilhaft kleinste Konzentrationen von Molekülen eines Referenzgases innerhalb der Umgebung des photoakustischen Gassensors detektiert werden.

In einer weiteren bevorzugten Ausführungsform ist der photoakustische Gassensor dadurch gekennzeichnet, dass der Emitter im Außenbereich der Sensorkammer positioniert ist und das Gehäuse einen mindestens teilweise transparenten Abschnitt aufweist, welcher im Strahlengang des Emitters liegt.

Durch den mindestens teilweise transparenten Abschnitt wird ein Durchlass der von dem Emitter ausgehenden Strahlung gewährleistet, um eine photoakustische Anregung einer zu Gaskomponente in der Sensorkammer vornehmen zu können. Mit der Transparenz ist die optische Eigenschaft gemeint, durch die eine Durchdringung der Strahlung durch den Abschnitt ermöglicht werden kann. Eine Reflexion und/oder Absorption findet bei einer nahezu vollständigen Transparenz nicht oder nur kaum und somit unwesentlich statt. Eine teilweise Transparenz ermöglicht wiederrum, dass lediglich ein Anteil der auftreffenden Strahlung den Abschnitt durchdringt. So kann beispielsweise der Abschnitt eine Transparenz von 100 % für eine im Wesentlichen vollständige Transparenz oder eine Transparenz von 90 %, 80 %, 70 %, 60 %, 50 % oder weniger für eine teilweise Transparenz aufweisen. Die Transparenz bezieht sich bevorzugt auf einen Wellenlängenbereich, in dem der Emitter Strahlung emittiert.

In bevorzugten Ausführungsformen kann der mindestens teilweise transparenten Abschnitt zu dem ein spektraler Filter sein oder ein spektraler Filter ist zusätzlich im Strahlengang zwischen dem Emitter und der Sensorkammer eingebracht. Die Wellenlänge bzw. der Wellenlängenbereich des Filters ist vorzugsweise auf das Absorptionsspektrum einer zu analysierenden Gaskomponente bzw. eines Referenzgases abgestimmt. So kann beispielsweise der Emitter Infrarotstrahlung in einem breiten Wellenlängenbereich von 1 bis 10 μm emittieren, während der der mindestens teilweise transparente Abschnitt und/oder ein spektraler Filter dafür ausgelegt ist, einen Wellenlängenbereich von ca. 4.2 μm passieren zu lassen, um eine photoakustische Anregung von Kohlenstoffdioxid einer zu analysierenden Gaskomponente bzw. eines Referenzgas vornehmen zu können. Der einzustellende Wellenlängenbereich und damit auch die Einstellung des mindestens teilweise transparenten Abschnittes bzw. des spektralen Filters hängt dementsprechend von der Wahl und/oder Komposition der anzuregenden Gasmoleküle ab.

Für den Filter kommen je nach Anwendungsfall verschiedene Ausführungsformen in Betracht. Beispielsweise ist die Verwendung eines Fabry-Pérot Filters denkbar. Ein solcher Filter kann beispielsweise zur Selektion sehr schmaler Spektren verwendet werden. Bevorzugt ist das dem Filter zur Grunde liegende Fabry-Pérot Interferometer durchstimmbar, beispielsweise durch eine Abstimmbarkeit der Temperatur oder durch mechanische Anpassung. So können flexibel gewünschte Spektren aus dem Ursprungsstrahl selektiert werden. Ebenso können vorzugsweise geeignete Dünnschichtfilter verwendet werden. Diese sind besonders einfach herzustellen und sind sehr kompakt. Auch eine flexible Kombination von Dünnschichtfiltern bzw. ein durch z. B. Verfahren der Temperatur abstimmbarer Dünnschichtfilter ist vorteilhaft. Es können auch Filter für andere Eigenschaften der IR-Strahlung, z. B der Polarisation, verwendet werden, welche bevorzugt ebenfalls Teil des Deckelements sind.

Zum mindestens teilweise transparenten Abschnitt des Gehäuses der Sensorkammer wird bevorzugt eine Bestrahlung des Gases in der Sensorkammer mittels der modulierbaren Infrarotstrahlung ermöglicht. Der Emitter kann dabei wie gewünscht in Bezug auf die Sensorkammer positioniert werden. Bevorzugt wird der Emitter dabei derart positioniert, dass der thermische Sensor der Sensorkammer nicht unmittelbar durch die Infrarotstrahlung beaufschlagt wird, um einen Einfluss des Infrarotstrahlung auf die thermische Messung zu minimieren.

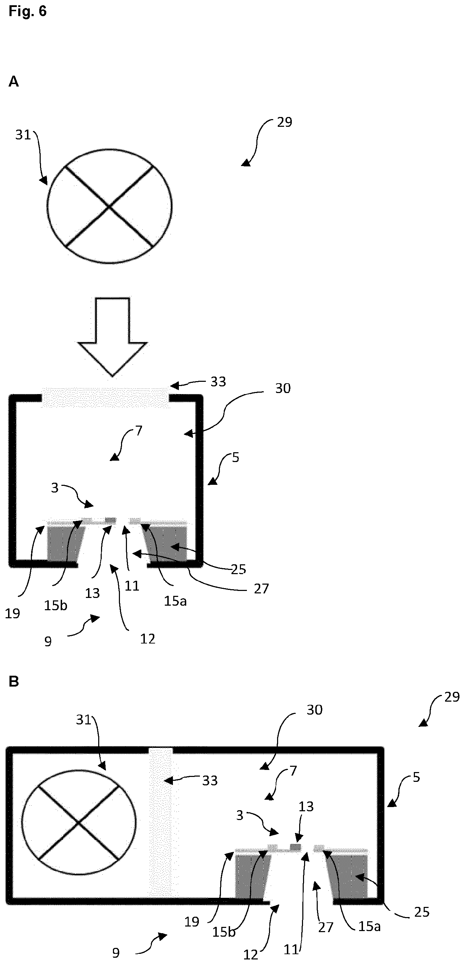

In einigen Ausführungsformen kann es bevorzugt sein den Emitter separat von der Sensorkammer eigenständig zu positionieren (vgl. Fig. 6A). Bevorzugt liegt in der Sensorkammer ein Referenzgas in, welches in einer Messstrecke zwischen IR-Emitter und Sensorkammer durch den photoakustischen Gassensor detektiert

Gelangt das zu detektierende Gas in den Strahlengang bzw. der Messstrecke zwischen dem Emitter und der Sensorkammer, erfolgt durch das zu detektierende Gas eine Absorption der Strahlung. Mithin ist ein entsteht ein abgeschwächteres PAS-Signal in der Sensorkammer, was in einer verminderten Fluidströmung durch die Ventilationskammer resultiert. Durch die Größe der Minderung lässt sich auf die Konzentration der zu detektierenden Gaskomponente in der Messstrecke zwischen dem Emitter und der Sensorkammer schließen. Bevorzugt wird hierbei ein schmalbandiger Emitter eingesetzt, damit möglichst nur die zu detektierende Gaskomponente angeregt werden kann.

In dieser Ausführungsform liegt ebenfalls vorteilhafterweise eine flexible Designausgestaltung des photoakustischen Gassensors vor, sodass beispielsweise, je nach Gegebenheiten des Raumes, in dem der photokaustische Gassensor verbaut werden soll, eine optimierte Position des Emitters bereitgestellt wird.

Ebenso kann es bevorzugt sein, den Emitter zusammen mit der Sensorkammer in einem Gehäuse des photoakustischen Gassensors zu integrieren (vgl. Fig. 6B).

In einer weiteren bevorzugten Ausführungsform ist der photoakustische Gassensor dadurch gekennzeichnet, dass der Emitter und die Sensorkammer von einem Gehäuse des photoakustischen Sensors umfasst sind, welches das Gehäuse der Sensorkammer umfasst.

Vorzugsweise ist dabei der Emitter innerhalb desselben Gehäuses des Gassensors eingebracht, welches die Sensorkammer umfasst. Die Sensorkammer kann dabei bevorzugt ebenfalls einen mindestens teilweise transparenter Abschnitt aufweisen, welcher gleichzeitig eine Trennwand innerhalb des Gehäuses des Gassensors definiert. Ein Innenbereich der Sensorkammer wird weiterhin durch das Gehäuse der Sensorkammer definiert. Ein Außenbereich der Sensorkammer kann einerseits einen Außenbereich meinen, welcher außerhalb der Sensorkammer ist, aber noch innerhalb des Gehäuses des photoakustischen Sensors. Anderseits kann der Außenbereich auch einen Außenbereich bzw. Umgebung des Gehäuses des photoakustischen Sensors meinen. Letzteres ist bevorzugt der Fall, sodass eine Ventilationsöffnung bevorzugt eine Fluidkommunikation zwischen einen Innenbereich der Sensorkammer und einem Außenbereich sowohl der Sensorkammer als auch des photoakustischen Sensors ermöglicht.

Durch die eine derartige Ventilationsöffnung oder eine oder mehrere zusätzliche Öffnungen kann ein zu detektierendes Gas aus der Umgebung in die Sensorkammer eindringen, sodass es innerhalb der Sensorkammer eine zu detektierende Gaskomponente zu einem PAS angeregt werden kann.

Des Weiteren erlaubt diese Ausführungsform einen zuverlässigen Schutz des Emitters und zeichnet sich zudem durch einen hohen Grad an Kompaktheit aus.

Die erfindungsgemäßen Aspekte sollen im Folgenden anhand von Figuren näher beschrieben werden, ohne auf diese beschränkt zu sein.

**Figuren**

Kurzbeschreibung der Figuren

Fig. 1     Schematische Darstellung einer bevorzugten Ausführungsform des erfindungsgemäßen MEMS-Mikrofons umfassend einen thermischer Sensor, welcher dazu konfiguriert ist, Schallwellen anhand einer Fluidströmung durch eine Ventilationsöffnung zu messen.

Fig. 2     Schematische Darstellung einer bevorzugten Ausführungsform des MEMS-Mikrofons umfassend eine Ventilationsöffnung und ein auslenkbares Diaphragma.

Fig. 3     Schematische Darstellung einer bevorzugten Ausführungsform des MEMS-Mikrofons, bei welchem eine Ventilationsöffnung als eine Apertur in einer Membran vorliegt, auf der sich der thermische Sensor befindet.

Fig. 4     Schematische Darstellung einer bevorzugten Ausführungsform des MEMS-Mikrofons, wobei der thermische Sensor in einem Kanal eingebracht vorliegt und eine Ventilationsöffnung als offener Querschnitt des Kanals in Höhe des thermischen Sensors gebildet wird.

Fig. 5     Schematische Darstellung einer bevorzugten Ausführungsform des MEMS-Mikrofons umfassend ein Diaphragma, welches durch Schallwellen auslenkbar ist, wobei das Diaphragma eine Membran umfasst, auf welcher der thermische Sensor angebracht ist und die Ventilationsöffnung als eine Apertur in der Membran vorliegt.

Fig. 6     Schematische Darstellung von bevorzugten Ausführungsformen eines erfindungsgemäßen photoakustischen Gassensors umfassend einen thermischen Sensor, welcher dazu konfiguriert ist, PAS-Signale anhand einer Fluidströmung durch eine Ventilationsöffnung in der Sensorkammer zu messen.

Detaillierte Beschreibung der Figuren

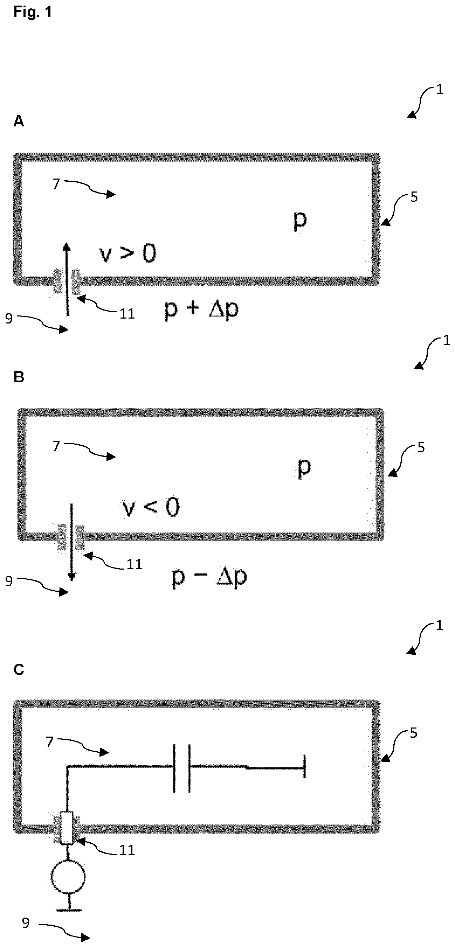

Fig. 1 zeigt eine schematische Darstellung einer bevorzugten Ausführungsform des erfindungsgemäßen MEMS-Mikrofons **1,** welches der Detektion von Schallwellen dient. Das MEMS-Mikrofon **1** weist einen Sensor und ein Gehäuse **5** auf. Das Gehäuse **5** umschließt einen Innenbereich **7.** Weiterhin weist das MEMS-Mikrofon **1** eine Ventilationsöffnung **11** auf, welche eine Fluidkommunikation zwischen dem Innenbereich **7** und einem Außenbereich **9** ermöglicht. Der Sensor ist ein thermischer Sensor, der dazu konfiguriert ist, Schallwellen, die zu einer Druckdifferenz zwischen dem Innenbereich **7** und dem Außenbereich **9** des MEMS-Mikrofons **1** führen, anhand einer Fluidströmung durch die Ventilationsöffnung **11** zu messen.

Das erfindungsgemäße MEMS-Mikrofon **2** nutzt aus, dass eine Druckdifferenz zwischen zwei unterschiedlichen Bereichen, hierbei zwischen dem Innenbereich **7** und Außenbereich **9,** dazu führt, dass ein Fluid für einen Druckausgleich eine Strömung ausführt.

Eine Druckdifferenz kann insbesondere dann auftreten, wenn eine Schallwelle auf das MEMS-Mikrofon 2 trifft. So kann es beispielsweise sein, dass im Außenbereich **9** ein höherer Druck vorliegt bzw. durch ein Schallereignis sich im Außenbereich **9** bildet. Der höhere Druck im Außenbereich **9** wird in Fig. 1A durch die Variable p+$\Delta$p bezeichnet, wobei $\Delta$p den Druckwert bezeichnet, um den der Druck im Außenbereich höher ist als ein Referenzdruck p im Innenbereich **7**. Infolgedessen resultiert eine Fluidströmung von dem Außenbereich **9** in den Innenbereich **7** über die Ventilationsöffnung **11**. Durch einen Sensor kann die Fluidströmung erfasst werden, wodurch Rückschlüsse auf die Schallwellen ermöglicht werden, durch das die Fluidströmung resultiert. Die Fluidströmung ist hierbei durch einen Pfeil gekennzeichnet. Im Kontext der Erfindung wird bevorzugt eine positive Geschwindigkeit v > 0 einer Fluidströmung zugeordnet, welche vom Außenbereich **9** in den Innenbereich **7** des MEMS-Mikrofons **1** führt.

In der Fig. 1B ist der umgekehrte Fall abgebildet. Hierbei liegt eine Druckdifferenz zwischen dem Innenbereich **7** und dem Außenbereich **9** des MEMS-Mikrofons **1** vor, bei der ein Referenzdruck p im Innenbereich **7** höher ist als ein Druck p-Δp im Außenbereich **9**. Infolge dieses Druckunterschiedes ergibt sich eine Fluidströmung vom Innenbereich **7** in den Außenbereich **9**. Im Kontext der Erfindung wird die Flussrichtung und damit die Geschwindigkeit bevorzugt negativ angegeben, d. h. v < 0.

Fig. 1C zeigt ein Schaltbild, welches das Funktionsprinzip des erfindungsgemäßen MEMS-Mikrofons **2** mit einer Ventilationsöffnung **11** näher illustrieren soll. Die Ventilationsöffnung **11** korrespondiert mit einem akustischen Widerstand, während das Rückvolumen mit einer Kapazität bzw. einer akustischen Compliance zusammenhängt. Dies kann bevorzugt durch einen Tiefpass erster Ordnung beschrieben werden, welcher einen Widerstand und einen Kondensator umfasst. Eine untere Grenzfrequenz ergibt sich bevorzugt aus $\omega = 1/(R*C)$, wobei R den akustischen Widerstand und C die akustische Kapazität darstellt. Die akustische Kapazität korrespondiert bevorzugt mit einem Rückvolumen, während der akustische Widerstand vorteilhaft durch einen geringen Querschnitt der Ventilationsöffnung hoch eingestellt werden kann. Durch ein hohes Rückvolumen und/oder einem hohen akustischen Widerstand ergibt sich mithin eine besonders niedrige Grenzfrequenz. Dadurch kann das MEMS-Mikrofon **1** vorteilhaft auch Schall detektieren, der Frequenz im Infraschallbereich aufweist.

Eine obere Grenzfrequenz kennzeichnet vorzugsweise eine Frequenz, oberhalb derer die Schallereignisse mit verminderter Sensitivität vermessen werden können. Während die untere Grenzfrequenz durch den Aufbau des MEMS-Mikrofons bestimmt wird, insbesondere durch die Ventilationsöffnung und das Gehäuse, wird die obere Grenzfrequenz bevorzugt im Wesentlichen durch den Sensor bestimmt. Im Falle eines thermischen Sensors für den Sensor wird beispielsweise die obere Grenzfrequenz kann beispielsweise durch eine Wärmekapazität des Temperatursensors oder eines thermischen Widerstands einer Membran beeinflusst, auf welcher sich ein Temperatursensor und/oder ein Heizelement befindet. Durch Bereitstellung eines miniaturisierten Temperatursensors können vorteilhaft ebenfalls hohe obere Grenzfrequenzen erreicht werden.

Demzufolge kann durch das MEMS-Mikrofon 1 bevorzugt sowohl eine besonders geringe untere Grenzfrequenz als auch eine hohe obere Grenzfrequenzen erreicht werden, sodass ein breites Frequenzband vorliegt, indem zuverlässige Messungen von Schallwellen erfolgen können.

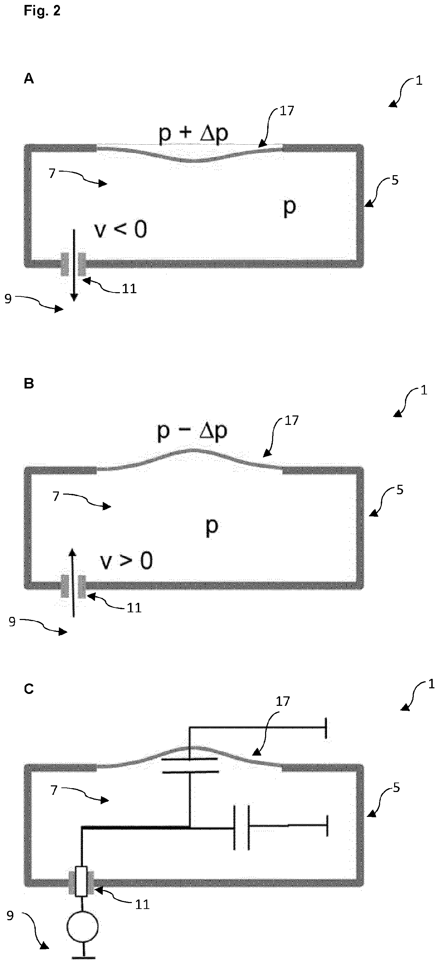

Fig. 2 zeigt eine bevorzugte Ausführungsform des erfindungsgemäßen MEMS-Mikrofons **1** umfassend eine Ventilationsöffnung **11** und ein auslenkbares Diaphragma **17**. Gemäß Fig. 2A ist kann das Diaphragma **17** eine Auslassung des Gehäuses **5** überspannen, sodass bei der Detektion von Schallwellen das Diaphragma **17** auslenkbar ist. Durch die Auslenkung und dadurch resultierende Schwingung des Diaphragmas **17** kann vorteilhaft neben dem Messsignal, welches vom thermischen Sensor erfasst werden kann, ein zusätzliches Messsignal detektiert werden. Während das Messsignal des thermischen Sensors eine Folge der Fluidströmung ist, ergibt sich ein Messsignal eines Diaphragmas **17** durch die Druckschwankungen der Schallwellen, welche auf das MEMS-Mikrofon **1** treffen. Mithin kann der thermische Sensor beim Aufweisen eines Diaphragmas **17** sowohl eine strömungsbasierte Messung durch die Fluidströmung als auch eine druckbasierte Messung durch Schwingungen des Diaphragmas **17** vornehmen. Hierdurch kann ein verbesserter Rückschluss auf Schallparameter der Schallwellen genommen werden.

In Fig. 2C ist ein entsprechendes Schaltbild eingezeichnet. Wie auch in der dargestellten Ausführungsform der Fig. 1 stellt die Ventilationsöffnung **11** einen akustischen Widerstand dar, während das Rückvolumen im Innenbereich **7** eine Kapazität darstellt. Zusätzlich zum Rückvolumen wirkt das Diaphragma **17** als eine kapazitive Komponente.

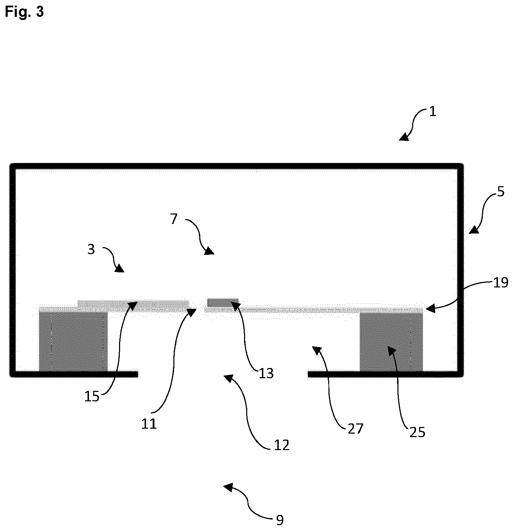

Fig. 3 zeigt schematisch eine bevorzugte Ausführungsform des erfindungsgemäßen MEMS-Mikrofons **1,** bei welchem eine Ventilationsöffnung **11** als eine Apertur in einer Membran **19** vorliegt, auf der sich ein thermische Sensor **3** befindet. Das MEMS-Mikrofon **1** umfasst das Gehäuse **5,** das einen Innenbereich **7** umschließt. Ferner weist das MEMS-Mikrofon **1** eine Ventilationsöffnung **11** auf, welche eine Fluidkommunikation zwischen dem Innenbereich **7** und dem Außenbereich **9** des MEMS-Mikrofons **1** ermöglicht. Der thermischer Sensor **3** ist dazu konfiguriert, Schallwellen, welche zu einer Druckdifferenz zwischen dem Innenbereich **7** und dem Außenbereich des MEMS-Mikrofons **1** führen, anhand einer Fluidströmung durch die Ventilationsöffnung **11** zu messen. Zu diesem Zweck weist der thermische Sensor **3** ein Heizelement **13** und einen Temperatursensor **15** auf. Die Ventilationsöffnung **11** liegt als eine Apertur in einer Membran **19** zwischen dem Heizelement **13** und dem Temperatursensor **15**. Ein Wärmestrom breitet sich ausgehend vom Heizelement **13** zum Temperatursensor **15** aus. Dadurch, dass die Fluidströmung für den Druckausgleich entweder vom Innenbereich in den Außenbereich oder umgekehrt von den Außenbereich in den Innenbereich strömt, steht die Ausbreitungsrichtung des Fluides im Wesentlichen senkrecht bzw. quer zur Ausbreitung des Wärmestroms ausgehend vom Heizelement **13** zum Temperatursensor **15**. Durch die Fluidströmung erfolgt eine Modulation des Wärmestroms, welche durch den Temperatursensor erkannt werden kann, beispielsweise als Temperaturabfall je stärker die Fluidströmung ausfällt.

Die Membran **19** umfassend den thermischen Sensor **3** wird von einem Träger **25** gehalten und erstreckt sich über eine Kavität **27**.

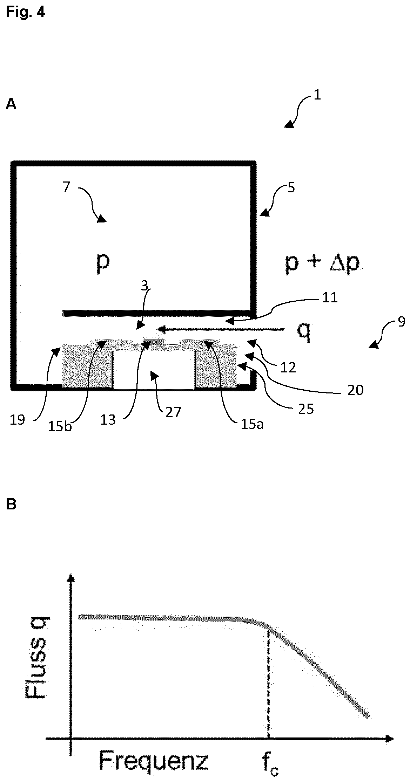

Fig. 4A zeigt schematisch eine weitere bevorzugte Ausführungsform des MEMS-Mikrofons **1**. Hierbei liegt der thermische Sensor **3** innerhalb eines Kanals **20** vor. Der thermische Sensor umfasst einen ersten Temperatursensor **15** zur Messung einer ersten Temperatur und einen zweiten Temperatursensor **15** zur Messung einer zweiten Temperatur sowie ein Heizelement **13,** wobei das Heizelement **13** zwischen dem ersten Temperatursensor **15a** und dem zweiten Temperatursensor **15b** angeordnet ist. Die Ventilationsöffnung **11** wird in dieser Ausführungsform mithin durch den offenen Querschnitt des Kanals **20** in Höhe des thermischen Sensors **3** gebildet. Der Kanal bezeichnet einen räumlichen Abschnitt, der als einen länglichen Abschnitt des Gehäuses **5** gebildet wird. Hierfür kann das Gehäuse **5** einen Teilabschnitt als dessen Umrandung umfassen, wodurch der Kanal **20** als einen länglichen Abschnitt gebildet wird. Innerhalb des Kanals **20** ist der thermische Sensor **3** eingebracht und die Ventilationsöffnung **11** liegt als ein Teilabschnitt des Kanals **20** vor, der zwischen dem thermischen Sensor **3** und dem Gehäuse **5** freibleibt.

Mit dem Kanal **20** ist insbesondere eine Wegstrecke gemeint, entlang derer sich die eine Fluidströmung zum Druckausgleich zwischen dem Innenbereich **7** und Außenbereich **9** ausbreitet, sodass ein thermischer Sensor **3** derart in den Kanal **20** positioniert werden kann, dass eine Modulation eines Wärmestroms des thermischen Sensors **3** messbar ist. Der Kanal **20** wird hierbei durch parallele Längsabschnitte des Gehäuses **5** gebildet, welche eine längliche Fluidkommunikation zwischen einem Außen- und Innenbereich des Gehäuses **5** ermöglichen.

Der thermische Sensor **3** kann entsprechend derart in den Kanal **20** positioniert werden, sodass ein verbleibender Bereich zwischen dem thermischen Sensor **3** und den Seitenwänden des Kanals **20** eine Ventilationsöffnung **11** bildet. Der Querschnitt der verbleibenden Bereichs Öffnung entspricht mithin dem Querschnitt der Ventilationsöffnung **11.**

Bei der Bereitstellung des Kanals als einen länglichen Abschnitt ist die Fluidströmung längs zu einer Ausbreitung des Wärmestroms ausgehend von einem Heizelement **13** zu den Temperatursensoren **15.** Mit anderen Worten erlaubt die Bereitstellung der Ventilationsöffnung durch einen Kanal es insbesondere, dass die Fluidströmung über dem thermischen Sensor in Richtung des Wärmestrom fließen kann. Die Fluidströmung ist hierbei durch einen Pfeil und mit dem Buchstaben q gekennzeichnet. Bei einer Fluidströmung q vom Außenbereich **9** in den Innenbereich **7** des MEMS-Mikrofons **1** wird der erste Temperatursensor **15a** von der Fluidströmung zunächst passiert werden, bevor das Fluid entlang des zweiten Temperatursensors **15b** strömt.

Dies hat zur Folge, dass ein Wärmestrom entlang der Fluidströmung begünstigt wird, sodass der Wärmestrom ausgehend vom Heizelement **13** in Richtung des zweiten Temperatursensors **15b** höher ausfällt als in Richtung des ersten Temperatursensors **15a** (entgegen der Fließrichtung des Fluides). Die am zweiten Temperatursensor **15b** messbare Temperatur wird somit höher sein als am ersten Temperatursensor **15a.** Eine Differenzmessung der Temperaturen des ersten Temperatursensors **15a** und zweiten Temperatursensors **15b** bzw. die Ausprägung des Unterschiedes ermöglicht wiederrum Rückschlüsse auf Parameter der Schallwellen, durch welche die Fluidströmung resultierte.

In Fig. 4B ist der Fluss q gegenüber einer Frequenz f eingezeichnet, wobei $f_c$ die obere Grenzfrequenz des MEMS-Mikrofons bezeichnet. Das MEMS-Mikrofon **1** ermöglicht eine Verschiebung der oberen Grenzfrequenz $f_c$ in positiver Richtung, sodass ein breiteres Frequenzband geschaffen wird, in dem Messungen vorgenommen werden können.

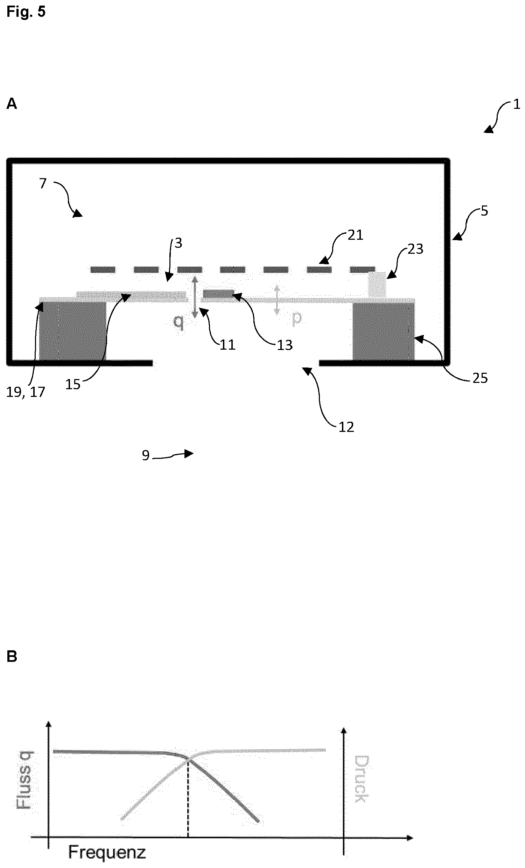

Fig. 5A zeigt in einer schematischen Darstellung eine weitere bevorzugte Ausführungsform des MEMS-Mikrofons **1.** In dieser Ausführungsform umfasst das MEMS-Mikrofons **1** ein Diaphragma, sodass bei der Detektion von Schallwellen durch eine Auslenkung des Diaphragmas ein zweites Messsignal erfassbar ist, beispielsweise auf Basis eines kapazitiven oder piezoelektrisch Messprinzips. Zu diesem Zweck ist das beabstandet zum auslenkbaren Diaphragma **17** eine Rückplatte **21** ortsfest auf einem Sockel **23** angebracht, sodass ein Abstand zwischen dem Diaphragma **17** und der Rückplatte **21** durch Schallwellen variierbar und Kapazitätsänderungen messbar sind. Die Rückplatte **21** ist perforiert und erstreckt sich über dem gesamten Diaphragma **17.** Das Diaphragma **17** umfasst eine Membran **19,** auf welcher der thermische Sensor **3** angebracht ist, wobeidie Ventilationsöffnung **11** als eine Apertur in der Membran **19** vorliegt.

In der Ausführungsform kann vorteilhafterweise sowohl ein erstes (Schall-)Messsignal in Abhängigkeit einer Fluidströmung durch die Ventilationsöffnung, als auch ein zweites Schall-)Messsignal in Abhängigkeit einer Auslenkung der Diaphragmas **17** durch eine einzelne Baukomponente erfasst werden.

Mit dem zweiten Messsignal ist ein Messsignal gemeint, welches durch die Auslenkung des Diaphragmas **17** in Folge der Schallwellen resultiert, was zusätzlich zum (ersten) Messsignal des thermischen Sensors gegeben ist. Anders ausgedrückt, ist ein erstes Messsignal durch den thermischen Sensor **3** des MEMS-Mikrofons **1** erfassbar, insbesondere durch eine Modulation des Wärmestroms, die durch die Fluidströmung über der Ventilationsöffnung **11** resultiert. Der thermische Sensor **3** umfasst hierbei ein Heizelement **13** und einen Temperatursensor **15** zwischen denen analog zur gezeigten Ausführungsform der Fig. 3 eine Ventilationsöffnung **11** als Apertur vorliegt. Das erste Messsignal wird wie obig erläutert anhand einer Modulation des Wärmestroms durch die Fluidströmung gemessen und ist in der vorliegenden Abbildung durch den eingezeichneten Doppelpfeil sowie dem Buchstaben q gekennzeichnet.

Ein zweites Messsignal kann durch eine druckabhängige Auslenkung des Diaphragmas **17** erfasst werden, insbesondere durch die Ausübung eines Schalldruckes oder Schalldruckpegels der Schallwellen. Das zweite Messsignal über eine Auslenkung des Diaphragmas **17** wird durch den Doppelpfeil und den Buchstaben p dargestellt. Dadurch können zwei Messsignale vom MEMS-Mikrofon **1** ausgelesen werden, die Rückschlüsse auf die Schallwellen zulassen. Vorteilhafterweise ergänzen sich das Messsignal des thermischen Sensors **3** und das zweite Messsignal durch eine Auslenkung des Diaphragmas **17** zu einem besonders breitbandigen MEMS-Mikrofon **1**. In Fig. 5B ist die Frequenzabhängigkeit der Messsignal des thermischen Sensors (Fluss q) und des auslenkbaren Diaphragma (Druck p) illustriert.

Vorteilhafterweise ergänzen sich das (erste) Messsignal des thermischen Sensors (Fluss q) und das zweite Messsignal durch eine Auslenkung des Diaphragmas (Druck p) in Bezug auf deren Sensitivität in unterschiedlichen Frequenzbereichen. Während mittels des ersten Messsignals durch den thermischen Sensor vorteilhaft auch niederfrequenter Schall, insbesondere auch unterhalb von 20 Hz zuverlässig detektiert werden kann, kann mit Hilfe des zweiten Messsignals, welches auf der Auslenkung des Diaphragmas **17** basiert, zuverlässig auch Schall mit höheren Frequenzen zuverlässig vermessen werden.

Fig. 6 zeigt schematisch bevorzugte Ausführungsformen eines photoakustischen Gassensors **29**. Der photoakustische Gassensor **29** umfasst einen modulierbaren Emitter **31** und eine mit einem Gas befüllbare Sensorkammer **30**. Die Sensorkammer **30** liegt im Strahlengang des Emitters **29** vor, sodass der Emitter **31** mittels modulierbar emittierbarer Strahlung das Gas in der Sensorkammer **30** zur Ausbildung von Schallwellen anregen kann. Die Sensorkammer **30** umfasst einen Sensor und ein Gehäuse **5**, wobei das Gehäuse **5** einen Innenbereich **7** der Sensorkammer **30** umschließt. Die Sensorkammer **30** weist eine Ventilationsöffnung **11** auf, welche eine Fluidkommunikation zwischen dem Innenbereich **7** und einem Außenbereich **9** der Sensorkammer **30** ermöglicht. Der Sensor ist ein thermischer Sensor **3**, welcher dazu konfiguriert ist, Schallwellen, welche zu einer Druckdifferenz zwischen dem Innenbereich **7** und dem Außenbereich **9** der Sensorkammer **30** führen, anhand einer Fluidströmung durch die Ventilationsöffnung **11** zu messen.

In Fig. 6A ist der Emitter **31** im Außenbereich **9** der Sensorkammer **30** positioniert ist. Das Gehäuse **5** weist einen mindestens teilweise transparenten Abschnitt **33** auf, welcher im Strahlengang des Emitters **31** liegt. Durch die Anbringung des Emitters **31** im Strahlengang zum mindestens teilweise transparenten Abschnitt des Gehäuses **5** wird gewährleistet, dass eine Erzeugung von Schallwellen und damit eines Fluidstroms innerhalb der Sensorkammer **30** und damit dem Innenbereich **7** ermöglicht wird.

Bevorzugt liegt in der Sensorkammer **30** ein Referenzgas vor, welches einem zu analysierendem Gas im Strahlengang zwischen dem Emitter **31** und der Sensorkammer **30** entspricht, sodass ein Anteil des Referenzgases im zu analysierenden Gas anhand der Ausbildung von Schalldruckwellen in der Sensorkammer durch den thermischen Sensor messbar ist.

Gelangt ein Molekül in den Strahlengang zwischen der Sensorkammer **30** und dem modulierbaren Emitter **30,** welches einem Molekül des Referenzgases entspricht, findet eine mindestens teilweise modulierte Absorption der Strahlung statt. Dadurch ist die die Intensität der Strahlung, welche auf die Sensorkammer trifft, für den Wellenlängenbereich des Absorptionsspektrums von Molekülen des Referenzgases vermindert. Entsprechend sind auch die Schalldruckwellen innerhalb der Sensorkammer reduziert, welche durch eine Anregung der Moleküle des Referenzgases resultieren. Als Folge wird eine reduziertes bzw. abgeschwächtes PAS-Signal durch den thermischen Sensor gemessen. Das Ausmaß der Reduktion bzw. Abschwächung erlaubt entsprechend einen Rückschluss auf den Anteil des Referenzgases, welches sich im Strahlengang bzw. der Messstrecke befindet.

In Fig. 6B sind der Emitter **31** und die Sensorkammer **30** von einem Gehäuse **5** des photoakustischen Sensors **29** umfasst. Dabei ist der Emitter **31** innerhalb des Gehäuses **5** des photoakustischen Sensors **29** eingebracht, welches die Sensorkammer **30** umfasst.

Die Sensorkammer **30** weist einen mindestens teilweise transparenten Abschnitt auf, welcher gleichzeitig eine Trennwand innerhalb des Gehäuses **5** des photoakustischen Sensors **29** definiert. Ein Innenbereich der Sensorkammer **30** wird weiterhin durch das Gehäuse der Sensorkammer **30** definiert. Ein Außenbereich der Sensorkammer **30** kann einerseits einen Außenbereich meinen, welcher außerhalb der Sensorkammer **30** ist, aber noch innerhalb des Gehäuses des photoakustischen Sensors **29**. Anderseits kann der Außenbereich auch einen Außenbereich bzw. Umgebung des Gehäuses **5** des photoakustischen Sensors **30** meinen. Letzteres ist wie dargestellt bevorzugt der Fall, sodass eine Ventilationsöffnung **11** eine Fluidkommunikation zwischen einen Innenbereich der Sensorkammer **30** und einem Außenbereich sowohl der Sensorkammer **30** als auch des photoakustischen Sensors **29** ermöglicht.

Durch die eine derartige Ventilationsöffnung **11** oder eine oder mehrere zusätzliche Öffnungen kann ein zu detektierendes Gas aus der Umgebung in die Sensorkammer **30** eindringen, sodass es innerhalb der Sensorkammer **30** eine zu detektierende Gaskomponente zu einem PAS angeregt werden kann.

Vorzugsweise ist die Wellenlänge des modulierbaren Emitters **31** und/oder eines optischer Filter auf ein Absorptionsspektrum einer in der Sensorkammer **30** zu detektierenden Gaskomponente abgestimmt.

Erfolgt die modulierte Bestrahlung mit einer Wellenlänge, welche dem Absorptionsspektrum eines in dem Gasgemisch befindlichen Moleküls einer Gaskomponente entspricht, findet eine modulierte Absorption statt, die zu Erwärmungs- und Abkühlungsprozessen führt, deren Zeitskalen die Modulationsfrequenz der Strahlung widerspiegeln. Gemäß dem photoakustischen Effekt führen die Erwärmungs- und Abkühlungsprozesse zu Expansionen und Kontraktionen der Gaskomponente, wodurch diese zur Ausbildung von Schalldruckwellen mit im Wesentlichen der Modulationsfrequenz angeregt wird. Die Schalldruckwellen werden auch als PAS-Signale bezeichnet und lassen sich mittels eines thermischen Sensors **3** messen. Hierbei resultiert insbesondere eine Fluidströmung durch die Ventilationsöffnung **11** infolge eines Druckunterschiedes zwischen einem Innenbereich **7** und einem Außenbereich **9,** welche anhand einer Modulation eines Wärmestroms zwischen einem Heizelement **13** und einem Temperatursensor **15** gemessen werden kann

**BEZUGSZEICHENLISTE**

| | |
|---|---|
| 1 | MEMS-Mikrofon |
| 3 | Thermischer Sensor |
| 5 | Gehäuse |
| 7 | Innenbereich |
| 9 | Außenbereich |
| 11 | Ventilationsöffnung |
| 12 | Schalleintrittsöffnung |
| 13 | Heizelement |
| 15 | Temperatursensor |
| 15a | Erster Temperatursensor |
| 15b | Zweiter Temperatursensor |
| 17 | Diaphragma |
| 19 | Membran |
| 20 | Kanal |
| 21 | Rückplatte |
| 23 | Sockel |
| 25 | Träger |
| 27 | Kavität |
| 29 | Photoakustischer Gassensor |
| 30 | Sensorkammer |
| 31 | Emitter |
| 33 | Mindestens teilweise transparenter Abschnitt |

**LITERATURVERZEICHNIS**

Zawawi, Siti Aisyah, et al. "A review of MEMS capacitive microphones." Micromachines 11.5 (2020): 484.

van Honschoten, Joost W., et al. "Optimization of a thermal flow sensor for acoustic particle velocity measurements." Journal of microelectromechanical systems 14.3 (2005): 436-443.

Xu, Xiang-Yuan, et al. "A monolithic three-dimensional thermal convective acoustic vector sensor with acoustic-transparent heat sink." JASA Express Letters 2.4 (2022): 044001.

Shin, Kumjae, et al. "A modeling and feasibility study of a micro-machined microphone based on a field-effect transistor and an electret for a low-frequency microphone." Sensors 20.19 (2020): 5554.

**Patentansprüche**

1. MEMS-Mikrofon (1) zur Detektion von Schallwellen umfassend einen Sensor und ein Gehäuse (5), wobei das Gehäuse (5) einen Innenbereich (7) des MEMS-Mikrofons (1) umschließt und das MEMS-Mikrofon (1) ferner eine Ventilationsöffnung (11) aufweist, welche eine Fluidkommunikation zwischen dem Innenbereich (7) und einem Außenbereich (9) des MEMS-Mikrofons (1) ermöglicht,
**dadurch gekennzeichnet, dass**
der Sensor dazu konfiguriert ist, Schallwellen, welche zu einer Druckdifferenz zwischen dem Innenbereich (7) und dem Außenbereich (9) des MEMS-Mikrofons (1) führen, anhand einer Fluidströmung durch die Ventilationsöffnung (11) zu messen.

2. MEMS-Mikrofon (1) nach dem vorherigen Anspruch
**dadurch gekennzeichnet, dass**
der Sensor ein thermischer Sensor (3) ist, der bevorzugt ein Heizelement (13) und mindestens einen Temperatursensor (15), vorzugsweise zwei Temperatursensoren, umfasst, sodass die Fluidströmung durch die Ventilationsöffnung (11) anhand einer Modulation eines Wärmestroms zwischen dem Heizelement (13) und dem Temperatursensor (11) messbar ist.

3. MEMS-Mikrofon (1) nach einem oder mehreren der vorherigen Ansprüche
**dadurch gekennzeichnet, dass**

der Sensor, bevorzugt ein thermische Sensor (3), auf einer Membran (19) angebracht ist, wobei die Membran (19) auf einem Träger (25) umfassend eine Kavität (27) vorliegt und die Membran (19) sich über der Kavität (27) erstreckt,
wobei bevorzugt die Membran (19) ein Material umfasst ausgewählt aus einer Gruppe umfassend ein elektrisches leitfähiges Material und/oder ein dielektrisches Material, wobei bevorzugt das elektrisch leitfähige Material ausgewählt ist aus einer Gruppe umfassend Halbleiter und/oder Metalle, insbesondere Silizium, Polysilizium, Graphen, Chalkogenid,
wobei bevorzugt das dielektrische Material ausgewählt ist aus einer Gruppe umfassend Siliziumnitrid, Siliziumdioxid, Aluminiumoxid, Aluminiumnitrid, Polyimid und/oder ein polymeres Material.

4. MEMS-Mikrofon (1) nach einem oder mehreren der vorherigen Ansprüche
**dadurch gekennzeichnet, dass**
das Gehäuse (5) eine Schalleintrittsöffnung (12) aufweist, sodass sich Schallwellen vom Außenbereich (9) in den Innenbereich (7) ausbreiten und strömungstechnisch zunächst die Schalleintrittsöffnung (12) und daraufhin die Ventilationsöffnung (11) passieren, wobei bevorzugt ein Querschnitt der Schalleintrittsöffnung (12) größer ist als ein Querschnitt der Ventilationsöffnung (11).

**5.** MEMS-Mikrofon (1) nach einem oder mehreren der vorherigen Ansprüche
**dadurch gekennzeichnet, dass**
die Ventilationsöffnung (11) einen Querschnitt von 1 $\mu m^2$ - 100 000 $\mu m^2$, bevorzugt von 1 $\mu m^2$ - 1 000 $\mu m^2$ aufweist und/oder die Ventilationsöffnung eine Form aufweist, ausgewählt aus einer Gruppe umfassend halbkreisförmig, kreisförmig, ellipsenförmig, dreieckig, viereckig, mehreckig oder schlitzförmig.

**6.** MEMS-Mikrofon (1) nach einem oder mehreren der vorherigen Ansprüche
**dadurch gekennzeichnet, dass**

dass die Ventilationsöffnung (11) als eine Apertur in einer Membran (19) vorliegt, auf der sich der thermische Sensor (3) befindet, wobei bevorzugt die Ventilationsöffnung (11) zwischen einem Temperatursensor (15) und einem Heizelement (13) des thermischen Sensors (9) vorliegt.

**7.** MEMS-Mikrofon (1) nach einem oder mehreren der vorherigen Ansprüche
**dadurch gekennzeichnet, dass**
die Ventilationsöffnung (11) als ein Kanal vorliegt, in oder an welchem der Sensor eingebracht vorliegt, wobei bevorzugt der Sensor ein thermische Sensor (3) ist, wobei besonders bevorzugt der thermische Sensor (3) entlang des Kanals einen ersten Temperatursensor (15a) zur Messung einer ersten Temperatur und einen zweiten Temperatursensor (15b) zur Messung einer zweiten Temperatur sowie ein Heizelement (13) umfasst, wobei das Heizelement (13) zwischen dem ersten Temperatursensor (15a) und dem zweiten Temperatursensor (15b) angeordnet ist.

**8.** MEMS-Mikrofon (1) nach einem oder mehreren der vorherigen Ansprüche
**dadurch gekennzeichnet, dass**
ein Diaphragma (17) eine Aussparung des Gehäuses überspannt, sodass bei der Detektion von Schallwellen das Diaphragma (17) auslenkbar ist.

**9.** MEMS-Mikrofon (1) nach einem oder mehreren der vorherigen Ansprüche

**dadurch gekennzeichnet, dass**
das MEMS-Mikrofon (1) ein Diaphragma (17) umfasst, sodass bei der Detektion von Schallwellen durch eine Auslenkung des Diaphragmas (17) ein zweites Messsignal erfassbar ist, vorzugsweise auf Basis eines kapazitiven, piezoelektrischen, piezoresistiven oder optischen Messprinzips.

**10.** MEMS-Mikrofon (1) nach dem vorherigen Anspruch
**dadurch gekennzeichnet, dass**
für eine Aufnahme des zweiten Messsignals beabstandet zum Diaphragma (17) eine Rückplatte ortsfest angebracht ist, sodass ein Abstand zwischen dem Diaphragma (17) und der Rückplatte (21) durch Schallwellen variierbar und Kapazitätsänderungen messbar sind, wobei die Rückplatte (21) vorzugsweise perforiert ist und sich über dem gesamten Diaphragma (17) erstreckt.

**11.** MEMS-Mikrofon (1) nach einem oder mehreren der vorherigen Ansprüche
**dadurch gekennzeichnet, dass**
das MEMS-Mikrofon ein Diaphragma (17) aus einem elektrisch leitfähigen und/oder dielektrischen Material umfasst, wobei bevorzugt ein Material für das Diaphragma (17) ausgewählt ist aus einer Gruppe umfassend Silizium, Aluminium, Nickel, Kupfer, Titan, Silber und/oder Gold, das optional in Kombination mit einem dielektrischen Material eingesetzt wird, wobei bevorzugt das dielektrische Material mit einer oder mehreren Elektroden kontaktiert ist.

**12.** MEMS-Mikrofon (1) nach einem oder mehreren der vorherigen Ansprüche
**dadurch gekennzeichnet, dass**
das MEMS-Mikrofon (1) ein Diaphragma (17) umfasst, welches durch Schallwellen auslenkbar ist, wobei das Diaphragma (17) eine Membran (19) umfasst, auf welcher der thermische Sensor (3) angebracht ist und die Ventilationsöffnung (11) als eine Apertur in der Membran (19) vorliegt.

**13.** Photoakustischer Gassensor (29) umfassend einen modulierbaren Emitter (31) und eine mit einem Gas befüllbare Sensorkammer (30), wobei die Sensorkammer (30) im Strahlengang des Emitters (29) vorliegt, sodass der Emitter (31) mittels modulierbar emittierbarer Strahlung das Gas in der Sensorkammer (30) zur Ausbildung von Schallwellen anregen kann, wobei die Sensorkammer (30) einen Sensor und ein Gehäuse (5) umfasst, wobei das Gehäuse (5) einen Innenbereich (7) der Sensorkammer (30) umschließt und die Sensorkammer (30) eine Ventilationsöffnung (11) aufweist, welche eine Fluidkommunikation zwischen dem Innenbereich (7) und einem Außenbereich (9) der Sensorkammer (30) ermöglicht,
**dadurch gekennzeichnet, dass**

der Sensor ein thermischer Sensor (3) ist, welcher dazu konfiguriert ist, Schallwellen, welche zu einer Druckdifferenz zwischen dem Innenbereich (7) und dem Außenbereich (9) der Sensorkammer (30) führen, anhand einer Fluidströmung durch die Ventilationsöffnung (11) zu messen.

14. Photoakustischer Gassensor (29) nach dem vorherigen Anspruch
**dadurch gekennzeichnet, dass**
der Emitter (31) im Außenbereich (9) der Sensorkammer (30) positioniert ist und das Gehäuse (5) einen mindestens teilweise transparenten Abschnitt (33) aufweist, welcher im Strahlengang des Emitters (31) liegt.

15. Photoakustischer Gassensor nach Anspruch 13
**dadurch gekennzeichnet, dass**
der Emitter (31) und die Sensorkammer (30) von einem Gehäuse des photoakustischen Sensors umfasst sind, welches das Gehäuse (5) der Sensorkammer (30) umfasst.

**Fig. 1**

A

B

C

**Fig. 2**

Fig. 3

Fig. 4

A

B

**Fig. 5**

A

B

**Fig. 6**

A

B

Europäisches
Patentamt

European
Patent Office

Office européen
des brevets

## EUROPÄISCHER RECHERCHENBERICHT

Nummer der Anmeldung

EP 23 20 4233

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/038099 A1 (HAHN SCHICKARD GES FUER ANGEWANDTE FORSCHUNG E V [DE]) 4. März 2021 (2021-03-04) | 1-14 | INV. H04R19/00 H04R19/04 |
| Y | * das ganze Dokument * ----- | 15 | H04R23/02 G01N21/17 |
| Y | CA 2 200 137 A1 (CERBERUS AG [CH]) 25. September 1997 (1997-09-25) * das ganze Dokument * ----- | 15 | |

RECHERCHIERTE
SACHGEBIETE (IPC)

H04R
G01N

Der vorliegende Recherchenbericht wurde für alle Patentansprüche erstellt

| Recherchenort | Abschlußdatum der Recherche | Prüfer |
|---|---|---|
| München | 8. April 2024 | Borowski, Michael |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**08-04-2024**

| Im Recherchenbericht angeführtes Patentdokument | Datum der Veröffentlichung | Mitglied(er) der Patentfamilie | | Datum der Veröffentlichung |
|---|---|---|---|---|
| WO 2021038099 A1 | 04-03-2021 | CN | 114286935 A | 05-04-2022 |
| | | EP | 3786616 A1 | 03-03-2021 |
| | | EP | 4022282 A1 | 06-07-2022 |
| | | JP | 2022546233 A | 04-11-2022 |
| | | US | 2022299427 A1 | 22-09-2022 |
| | | WO | 2021038099 A1 | 04-03-2021 |
| CA 2200137 A1 | 25-09-1997 | AT | E268472 T1 | 15-06-2004 |
| | | CA | 2200137 A1 | 25-09-1997 |
| | | EP | 0801296 A1 | 15-10-1997 |
| | | ES | 2222489 T3 | 01-02-2005 |
| | | PT | 798552 E | 29-10-2004 |
| | | US | 5841017 A | 24-11-1998 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10451589 B2

**In der Beschreibung aufgeführte Nicht-Patentliteratur**

- **ZAWAWI** ; **SITI AISYAH et al.** A review of MEMS capacitive microphones. *Micromachines*, 2020, vol. 11.5, 484
- **VAN HONSCHOTEN** ; **JOOST W. et al.** Optimization of a thermal flow sensor for acoustic particle velocity measurements. *Journal of microelectromechanical systems*, 2005, vol. 14.3, 436-443
- **XU** ; **XIANG-YUAN et al.** A monolithic three-dimensional thermal convective acoustic vector sensor with acoustic-transparent heat sink. *JASA Express Letters*, 2022, vol. 2.4, 044001
- **SHIN** ; **KUMJAE et al.** A modeling and feasibility study of a micro-machined microphone based on a field-effect transistor and an electret for a low-frequency microphone. *Sensors*, 2020, vol. 20.19, 5554